# EUROPEAN PATENT APPLICATION

(11) **EP 4 848 129 A1**
(43) Date of publication of application: **02.12.2026**
(21) Application number: 25209532.8
(22) Date of filing: 17.10.2025
(51) Int. Cl.: G06F 21/64, H04L 9/00, H05K 7/20

(54) **SYSTEM AND METHOD FOR THERMAL MANAGEMENT AND ENERGY OPTIMIZATION IN DIGITAL INFRASTRUCTURES**

(30) Priority: 02.06.2025 US 202563815970 P; 31.05.2025 BG 11408925
(71) Applicant: Xylon X Ltd, Sofia (BG)
(72) Inventor: Kotsev, Nikolay, Sofia (BG); Abraham, Nicholas, Hertford, NC (US)
(74) Representative: Benatov, Samuil Gabriel

(57) **Abstract**

The invention provides an integrated system for thermal management and energy optimization in digital infrastructures, such as Data centers, AI centers, multi-GPU or ASIC mining hardware, consisting of a tank for high-efficiency fluid cooling, AI-driven optimization of flow and hardware behavior, dynamic blockchain-based tokenomics using real-time regional environmental data, and flexible CoP measurement. The system of the invention enables decentralized, energy-aware operations suitable for data centers, industrial processes, and blockchain mining facilities.

## Description

### FIELD OF THE INVENTION

The present invention relates to integrated systems for efficient thermal management and carbon optimization in high-performance computing, industrial processing, or energy-intensive environments. More specifically, it relates to an Al-optimized, and blockchain-enabled immersion cooling system, which integrates a blockchain-based platform for real-time tracking, tokenization of energy production, carbon credit issuance, and transparent auditing.

### BACKGROUND OF THE INVENTION

Modern data centers and industrial systems generate substantial heat, leading to the adoption of immersion cooling technologies. However, existing solutions often lack real-time adaptive control, and are inefficient in energy-cost allocation per radiator or component, and do not consider environmental factors such as carbon emissions. The generation of substantial low-grade waste heat, typically discharged unused, leads to inefficiencies and increased carbon footprints.

Moreover, current blockchain implementations fail to integrate with physical environmental metrics for real-time tokenomics, limiting their usefulness in carbon tracking and offsetting strategies.

Blockchain innovation is often described as a revolution in digital trust and finance, using signatures and hashing to reduce fraud. To form a consensus of truth, a peer-to-peer network validates transactions, which are essentially signed and hashed messages. In essence, this makes a blockchain a decentralized system of notarization. Proof of work (PoW) is added to ensure a fair and randomized method of validation.

Real-world assets (RWAs) vastly outscale fiat in market capitalization, with real estate alone comprising nearly half a quadrillion dollars. Tokenizing RWAs is therefore widely considered the next evolution of blockchain. However, the challenge lies in accurately representing real-world data on-chain, which typically involves oracles.

In GPU/ASIC mining, 95-99% of power dissipates as heat, creating significant cooling demands and costs. There is a need in the state of the art to provide systems utilizing said excessive heat.

The need exists for an optimized system.

### SUMMARY OF THE INVENTION

A task of the invention is to create an optimized system for efficient thermal management and carbon optimization in high-performance computing, providing environmentally-aware token generation to address energy and sustainability concerns holistically.

This task is solved with the creation of the system for thermal management and energy optimization in digital infrastructures, comprising a closed-loop thermal circuit containing a heat-transfer medium and including at least one immersion vessel, at least one electronic processing assembly, at least one service interface, at least one subsystem, circulation means, an instrumentation layer, an AI-based control block, a digital-token issuance interface, and a blockchain-based control subsystem, wherein:
(a) said heat-transfer medium is configured to receive heat from the least one electronic processing assembly which is in contact with the medium, the circuit further including the least one service interface configured to transfer thermal energy to the least one subsystem;
(b) circulation means comprise one or more pumps coupled to the closed-loop thermal circuit to drive the medium between the immersion vessel and the service interface;
(c) the instrumentation layer comprises at least one of:
   (i) temperature sensors disposed to measure temperatures of the medium within the immersion vessel and along the circuit;
   (ii) at least one flow sensor disposed to measure volumetric flow of the medium in the circuit;
   (iii) electrical metering configured to measure electrical consumption of the electronic processing assembly and auxiliaries; and
   (iv) at least one service-quantity meter disposed at or associated with the service interface and configured to determine a delivered service quantity selected from useful heating, cooling, water produced, or electricity regenerated;
(d) the AI-based control block includes a processor, memory, and communication means, and is configured to:
   (i) acquire measurements from the instrumentation layer and, when available, external data describing any of grid electricity, carbon intensity, energy price, or ambient conditions;
   (ii) compute thermodynamic performance metrics based on total electrical input of the system, and, where applicable for grid-connected configurations;
   (iii) perform measurement-and-verification analysis on interval data and validate plausibility of the measurements; and
   (iv) command the circulation means and the electronic processing assembly to maintain defined operating targets; and
(e) the digital-token issuance interface is coupled to the AI-based control block and to the blockchain-based control subsystem, and is configured to record, when issuance policy conditions are met, based on the analysis from the AI-based control block, a representation of verified energy savings and/or emissions reductions derived from the interval data.

Heat removed from the immersed electronic processing assembly at the immersion vessel is conveyed by the closed-loop thermal circuit to the service interface to deliver the service in (c)(iv), the AI-based control block coordinates measurement, verification, and actuation for stable operation, and the digital-token issuance interface publishes verifiable records corresponding to the analyzed intervals.

Grid-connected configurations can be for example additional grid-referenced metrics using electricity drawn from an external grid.

In a preferred embodiment of the invention, the at least one pump are hydraulic.

In a preferred embodiment of the invention, the heat-transfer medium is heat transferring dielectric fluid, and the at least one immersion vessel is at least one tank, and the at least one electronic processing assembly is at least one digital infrastructure, and the at least one service interface is at least one subsystem, containing at least an external heat exchanger configured to recover waste heat.
- said least one tank containing heat transferring dielectric fluid, connected by at least one pipe connection to said least one subsystem, containing at least an external heat exchanger configured to recover waste heat, in a closed loop,
- said at least one digital infrastructure is immersed in said heat transferring dielectric fluid of each of the tanks, or is in contact with it,
- one or more circulation pumps, positioned in each of the tanks with access to the fluid inside said tanks, wherein each of said pumps is connected by a pipe connection to the at least one external heat exchanger,
- an AI-based control block configured to monitor, analyze, and optimize the operation of the system in real time, and comprising a memory, a processor and communication means,
- temperature sensors configured for measuring temperature of heat transferring dielectric fluid around the at least one digital infrastructure, and flow sensors configured for dielectric fluid flow rate measurement, wherein each tank comprises such temperature and flow sensors, which are configured to send real time data to the AI-based control block for dynamic pump/ digital infrastructure parameter adjustments,
- communication unit for data connection,
- a blockchain-based control subsystem, configured for token issuance and validation of performance thresholds for Energy Efficiency Tokens and/or Water Generation and/or Carbon Reduction Tokens,
- a digital active generation interface with a logical block for digital active generation installed in each digital infrastructure, configured for collecting and analyzing energy efficiency and/or water generation, and/or carbon offsets based on received information from the AI-based control block, and for issuing digital actives for verified energy efficiency and carbon offsets, wherein the digital active generation interface is directly or indirectly connected to at least one of the AI-based control block for two-way data exchange, and to local hardware sensors, and to the blockchain-based control subsystem, and to the at least one digital infrastructure,
wherein said AI-based control block has a logical block configured for analysing received data for at least one of:
- temperature measurements from sensors located within or around the at least one immersion tank containing dielectric cooling fluid;
- flow-rate measurements of the dielectric fluid circulating through the at least one tank and associated external heat exchangers;
- device computational load from the at least one digital infrastructure, measured from at least one temperature sensor located outside of the tank and on the fluid line between the inlet and outlet of the tank in which the at least one digital infrastructure is arranged;
- thermal transfer parameters and energy balance data from connected subsystems, including heat exchangers, and optionally water-production modules, and cooling or heating circuits;
- performance parameters for calculating the coefficient of performance of the system, including total thermal input, useful heat or water output, and derived energy efficiency, derived from sensors;
- energy mix of used grid composition determining the percentage of electricity generated from different types renewable and fossil fuels sources in a specific region at a given time, which is delivered to the system from external sensors and/or computer device through a logical subblock for real-time oracles measurements;
- carbon intensity determining the amount of CO₂ emissions produced per kilowatt-hour of electricity, which varies by region and time of day, which is delivered to the system from external sensors and/or computer device through a logical subblock for real-time oracles measurements;
- energy cost signals, which are delivered to the system from external sensors and/or computer device through a logical subblock for real-time oracles measurements,
- environmental conditions, which are directly or indirectly delivered to the system from external sensors through a logical subblock for real-time oracles measurements;
- verification and reporting data received from a blockchain-based control subsystem, including digital active issuance events and validation of performance thresholds for Energy efficiency digital actives and/or Water Generation and/or Carbon reduction digital active.

Digital actives can be tokens. In addition to tokens, the system may issue other forms of digital assets, including blockchain-verified efficiency or carbon certificates, renewable energy or water credits, digital measurement records representing verified performance data, and cryptographically secured proof-of-operation files that document real-time system efficiency and environmental impact.

Said AI-based control block is also configured to calculate optimal cooling level and to control pump speed.

Said AI-based control block is also configured to calculate coefficient of performance of the system based on the received measured data in the logical block of the AI-based control block.

The at least one digital infrastructure, and the sensors for temperature and flow measurements, and the one or more circulation pumps, and the AI-based control block are configured for connection to a power supply.

In one embodiment of the invention, the at least one digital infrastructure is a Data Center or AI Center.

In another embodiment of the invention, the at least one digital infrastructure is a GPU or ASIC.

The system can comprise multiple interconnected subsystems, including a thermal transfer subsystem with at least one heat exchanger for recovering low-grade waste heat, a fluid circulation subsystem with pumps and flow sensors for dielectric coolant management, an AI-based control subsystem for dynamic optimization and performance analysis, an atmospheric water generation subsystem utilizing recovered heat for water production, and a blockchain verification subsystem for recording operational data, validating efficiency metrics, and issuing digital environmental tokens.

The heat exchanger can be a separate dedicated element an integrated thermally conductive surface in another element of the system.

Preferably, the tank is vacuum-insulated and includes an internal layer for reducing heat loss attached to the inner side of the walls of the tank.

In one embodiment of the invention, the system further comprises thermoelectric generators, which are connected to the digital infrastructure and/or to one or more pumps and/or to one or more sensors, said thermoelectric generators are immersed in the heat transferring dielectric fluid inside the tanks, wherein said thermoelectric generators are connected to a power management system and to the AI-based control block.

In one embodiment of the invention, the system further comprises at least one solar panel which is connected to the digital infrastructure and/or to one or more pumps and/or to one or more sensors, and to a power management system, wherein an energy measurement sensor is connected to the at least one solar panel and to the AI-based control block.

In one embodiment of the invention, used circulation pumps are pumps for low-viscosity circulation.

In one embodiment of the invention, at least one fluoropolymer-based filter is positioned after the circulation pump and before a point of returning of fluid back to the tank.

In one embodiment of the invention, the system further comprises at least one microcontroller, connected to a motorized valve or servo-controlled flow switch, placed in the loop between an exit point and an entry point of the fluid from/to the tank, wherein said at least one microcontroller and motorized valve or servo-controlled flow switch are connected to the power source.

In one embodiment of the invention, the blockchain interface with a logical block for blockchain-based tokenomics integrated circuit is configured for issuing tokens to users for each verified kWh saved and/or for each verified kilogram of carbon offset, regionally adjusted by the logical subblock for real-time oracles measurements.

In one embodiment of the invention, the blockchain interface with a logical block for blockchain-based tokenomics integrated circuit is configured for using smart contracts for automatic reward distribution based on energy efficiency and sustainability metrics.

In one embodiment of the invention, the blockchain interface with a logical block for blockchain-based tokenomics integrated circuit is configured for verifying real-time energy efficiency in ASIC/GPU hardware with a Proof of Efficiency (PoE) algorithm for issuance of tokens based on measured power draw vs. recovered heat.

In one embodiment of the invention, the blockchain interface with a logical block for blockchain-based tokenomics integrated circuit has logical subblock configured for communication with a Stratum-integrated protocol correlating device performance data to on-chain PoE issuance.

In one embodiment of the invention, the heat exchanger is part of a thermally powered ejector-based air conditioning system configured for leveraging waste heat or solar thermal energy for cooling without traditional mechanical compressors.

In one embodiment of the invention, a line of dielectric fluid is in direct contact with heat recovery capability with a backplate of solar panel in a sealed cavity.

In one embodiment of the invention, the system further comprises an integrated industrial energy management subsystem configured for capturing, upgrading, storing, and redistributing thermal and electrical energy recovered from the at least one external heat exchanger, the subsystem comprising:
(a) at least one chemical heat transformer configured to upgrade low-grade waste heat of approximately 75 °C from the dielectric-fluid cooling loops of the digital infrastructure to high-grade thermal energy through thermochemical reactions;
(b) a thermal buffer storage unit containing stratified thermal media selected from sand, molten salt, or water-based fluids, the buffer being configured to
   (i) receive continuous thermal input from the chemical heat transformer, and
   (ii) receive intermittent thermal input from at least one electrically powered heating element supplied by renewable energy sources;
   (iii) store heat within the stratified layers of thermal media to maintain temperature gradients and minimize losses;
   (iv) discharge or deliver stored heat to downstream subsystems and process heating circuits, in response to thermal demand,
(c) a thermal-oil loop arranged to extract and distribute upgraded heat at temperatures between 180 °C and 200 °C to one or more downstream industrial subsystems selected from
   (i) an Organic Rankine Cycle generator for electricity regeneration,
   (ii) absorption chillers,
   (iii) district-heating networks, and
   (iv) facility or process-heating units,
wherein the blockchain-based control subsystem is configured to
(i) monitor thermal and electrical-energy flows across the full system lifecycle,
(ii) tokenize carbon-credit and electricity-generation data based on verified energy reuse and renewable-integration metrics,
(iii) publish operational and regulatory data on-chain using a decentralized proof-of-stake network to ensure transparency and fraud resistance, and
(iv) enable trading of tokenized electricity or carbon-credit assets via smart contracts.

In one embodiment of the invention, the heat exchanger is part of a blockchain-integrated modular water-production apparatus configured to convert low-grade waste heat from an immersion-cooled computing device into fresh water, wherein the apparatus comprising:
- a sorption module configured to capture and regenerate atmospheric moisture using the recovered waste heat;
- a condensation chamber configured to condense desorbed vapor into liquid water;
- a sealed water-collection unit configured to store the condensed water;
- integrated control sensors configured to monitor temperature, humidity, flow rate, and water level and to manage the sorption-regeneration cycles of the system;
- a measurement and control subsystem configured to determine water-production performance metrics including the coefficient of performance (COP), thermal energy input, and mass of collected water; and

wherein the blockchain-based control subsystem is configured to:
   a) receive verified operational data from said measurement and control subsystem,
   b) calculate environmental performance indicators including energy savings and carbon-emission reductions associated with the recovered waste heat, and
   c) generate cryptographically verifiable digital environmental tokens, comprising:
      I. Energy Efficiency Tokens, issued based on verified thermal-to-water conversion efficiency or energy savings, and
      II. Carbon Reduction Tokens, issued based on calculated and verified emission offsets;
wherein said blockchain-based subsystem employs secure Internet-of-Things (IoT) communication and smart-contract logic to validate measurement data on-chain prior to token issuance,
and wherein all performance records, verification data, and token issuance events are stored on a distributed ledger for transparency, traceability, and auditability.

According to the invention, also a method for optimizing energy efficiency in digital infrastructures is created, which comprises the steps of:
a) immersing hardware in a cooling tank to regulate thermal load;
b) applying AI-driven dynamic optimization to adjust coolant flow, device power allocation, and workload balancing based on real-time data received from sensors;
c) integrating digital active generation to verify energy savings and allocate efficiency digital active and carbon credits tokens accordingly;
d) integrating blockchain-based tokenomics to verify energy savings and allocate efficiency tokens and carbon credits tokens accordingly;
e) measuring CoP through a flexible system that does not require direct fluid inlet/outlet tracking unless per-radiator data is needed.

In one embodiment of the method, the digital infrastructure is a Data Center or AI Center, or a GPU or ASIC hardware.

In one embodiment of the invention, the method comprises the step of integrating solar energy input as a supplemental or primary power source for system operation, wherein the photovoltaic energy contribution is credited only in CO₂ emission calculations using ${E}_{grid} = {E}_{total} - {E}_{solar} ,$ while maintaining Eₜₒₜₐₗ in the denominators of CoP or efficiency formulas to preserve the complete energy balance.

In one embodiment of the invention, the verification of energy savings and allocation of efficiency tokens and carbon credits tokens is based on computational proof of efficiency.

In one embodiment of the invention, the optimized digital infrastructure further comprises a waste-heat utilization subsystem configured to drive atmospheric water generation,
the method additionally comprising the steps of:
- recovering low-grade heat from the immersion-cooling dielectric fluid and transferring it through a heat exchanger to a water-production module configured to extract water from ambient air;
- measuring the produced water volume and the corresponding thermal energy input to determine a water-generation coefficient of performance;
- comparing the measured coefficient of performance with a predefined baseline efficiency value; and
- upon verification that the measured efficiency exceeds said baseline, issuing blockchain-based digital environmental tokens, including energy-efficiency tokens and carbon-reduction tokens, through the digital-active-generation subsystem defined in step (c), the issuance being validated automatically via smart-contract logic using data received from the system sensors.

The system for thermal management and energy optimization in digital infrastructures, such as multi-GPU or ASIC mining, according to the invention, allows efficient cooling, real-time system adaptation, and quantifiable environmental impact, all within a blockchain-compatible framework. With its capabilities, the system allows utilizing the excessive heat and using it for other purposes, and also allows off-grid, resilient HVAC and water production.

Blockchain technology is used to tokenize energy outputs and carbon offsets, enabling verifiable, fraud-resistant participation in energy and carbon markets.

### DEFINITIONS

Thermodynamic COP (COP_th): Useful heating or cooling delivered in an interval divided by the total electrical energy consumed in the same interval (compute, pumps, fans, controllers included).

Grid COP (gating/reporting only): Useful heating or cooling delivered in an interval divided by the grid electricity drawn in the same interval; not a thermodynamic measure.

Total electrical energy (Total Input): Complete electrical consumption over the interval, regardless of source.

Grid electricity (Grid Draw): Total electrical consumption minus on-site self-consumed renewable/regenerated electricity.

Useful heat / Cooling output: Measured delivered heat or removed heat over the interval.

Energy savings: Baseline energy for the same service minus total electrical input.

Emissions reduction: Avoided grid electricity multiplied by a region-specific emission factor.

Thermodynamic COP (heating/water): useful heat divided by total electrical input for the interval.

Cooling efficiency (EER/COP_c): cooling delivered divided by total electrical input for the interval.

Grid COP (gating/reporting): service delivered divided by grid draw; used only for issuance gates and public reporting.

### EXEMPLARY EMBODIMENTS OF THE INVENTION

Below are described preferred embodiments of the invention, which do not limit the scope of protection of the invention. It is clear for the skilled person that some features are described only in some preferred embodiments and in other embodiments these features could be missing.

All abbreviations and symbols used in the present description correspond to their commonly accepted meanings and standard definitions as recognized in the relevant technical field.

The integrated system, according to the invention provides an AI-driven solution that optimizes immersion cooling performance while generating carbon-related tokens based on real-time environmental data.

The system verifies real-time energy efficiency in digital infrastructures, such as Data centers or AI centers or ASIC/GPU hardware with a logical block having a Proof of Efficiency (PoE) algorithm, issuing tokens based on measured power draw vs. recovered heat.

The core issue that the invention solves is the massive energy waste in traditional mining, used merely to win the chance at a block reward. While miners may profit, there is no inherent environmental benefit. Mining hardware generates significant heat-a byproduct that can be repurposed. The same is true for the graphics cards used by artificial intelligence which is another vector being explored. The invention has developed specialized hardware that utilizes this heat similarly to a heat pump, powering HVAC systems for homes or commercial buildings, or other systems described herein as examples, providing mining profitability, and issues verifiable carbon and energy credits that are tradable or redeemable. This repurposing of heat is the first step in creating a sustainable mining ecosystem. Carbon credits and energy credits are considered RWAs because they represent measurable, redeemable savings in real-world energy use. While these credits can be traded, they often lack transparency. The invention addresses this by leveraging the immutable nature of blockchain and integrating mining data into an oracle-based smart contract system. Through real-time data from the mining pool, the invention calculates and issues carbon credits to hardware owners based on their energy savings, and mining contribution. This makes it easier for businesses and individuals to justify carbon credit claims and benefit from associated tax deductions or market trades. This ecosystem connects blockchain with real-world value, bypassing speculative hype to offer practical benefits. Users save on energy costs, generate revenue from mining, and reduce their carbon footprint-all while contributing to a transparent and efficient system of RWA tokenization.

Below are given embodiments of the system for specific digital infrastructures, but it will be clear for the skilled person that these described embodiments are also applicable for other digital infrastructures, such as Data centers or AI centers or ASIC/GPU hardware or other described herein examples.

The system comprises, but is not limited to:
- One or more tanks that house heat transferring dielectric fluid for immersion cooling with minimal thermal loss. Each of the tanks can be vacuum-insulated or covered with thermoelectric generator.
- AI-driven flow/device optimization to dynamically adjust flow rates, component activation, and cooling parameters based on system usage and ambient conditions.
- Blockchain Tokenization for verified energy efficiency and carbon offsets.
- Dynamic tokenomics powered by logical subblock for real-time oracles measurements that fetch region-specific energy mix and carbon intensity data to calculate blockchain-based carbon tokens.
- A flexible CoP measurement framework that allows calculation of efficiency metrics using aggregate or per-radiator data. The system is adapted for scalable implementation from single radiator to multi-radiator lumpsum measurement, i.e. from large industrial to mini solutions. The system can function efficiently across different deployment scales - from small setups with a single cooling unit (radiator) to large-scale installations with multiple radiators working in parallel or coordination, such as in a server farm or industrial cooling system. The system also supports centralized measurement and analysis of key performance indicators. The system is designed to operate in a modular and flexible way, enabling deployment from small-scale units to full-scale infrastructure without redesigning the entire architecture. Instead of monitoring each individual radiator separately, the system can aggregate data from all radiators and provide a single, unified performance metric (e.g., total power consumption, heat dissipation, or Coefficient of Performance - CoP). This simplifies monitoring, optimization, and carbon accounting.

The tank minimizes heat loss with immersion cooling, as it contains a dielectric cooling fluid.

The tank can be made of stainless steel or copper or aluminum or high-grade polymers, chosen for chemical compatibility with heat transferring dielectric fluids.

The tank can have integrated one or more copper finned radiators for optimal heat dissipation, or alternatively aluminum finned radiators.

Possible heat transferring dielectric fluids are perfluoropolyether, perfluorocarbon, bio-based ester, synthetic hydrocarbon and synthetic ester such as synthetic isoparaffins or polyalphaolefin.

Preferably, the heat transferring dielectric fluid is of a type, which can remain stable for at least 10 years.

Vacuum-insulated tanks provide superior thermal insulation through vacuum layer, similar to cryogenic Dewar flasks. This ensures minimal heat transfer with the environment, increasing cooling efficiency and allowing for longer fluid service life.

Vacuum-insulated tanks can comprise an internal vacuum insulation layer positioned between the inner chamber (containing the heat transferring dielectric fluid and immersed hardware components) and the outer shell of the tank. This layer is designed to significantly reduce thermal losses to the external environment. The vacuum layer acts as a thermal barrier, minimizing conductive and convective heat transfer. This helps to maintain a stable internal temperature, improving the efficiency of heat reuse from ASICs or GPUs. It supports passive thermal retention, which can be crucial for energy optimization, especially in setups reclaiming waste heat for secondary applications (e.g., space heating or water preheating). The vacuum insulation may be implemented for example using multi-layer insulation (MLI), aerogels, or double-walled construction with a sealed vacuum space in between. The structure can be for example cylindrical or rectangular, depending on installation constraints. By maintaining internal thermal consistency, the vacuum layer reduces the energy burden on active cooling or heating components and improves the Coefficient of Performance (CoP) of the system.

Each tank is connected in a closed loop with external heat exchanger by pipe connections. Also, it is possible few or all of the tanks to be connected in a single closed loop with external heat exchanger.

The heat exchanger can be air-to-fluid (like radiators) or fluid-to-fluid (like plate or coil exchangers).

The heat exchanger can be for example a radiator or absorption chiller.

In a preferred embodiment of the system, it can be used for both heating and cooling purposes.

In this case, if the setpoint is above the room temperature, the system initializes heating by switching the flow to the radiators. If the setpoint is below the room temperature, the system initializes cooling by switching the flow through the absorption chiller (or cooling loop).

The system comprises one or more microcontrollers, each of them connected to a motorized valve or servo-controlled flow switch, placed in the loop between an exit point and an entry point of the fluid from/to the tank, which automatically routes fluid to the appropriate loop based on the current room temperature vs. setpoint. Said microcontroller and motorized valve or servo-controlled flow switch are connected to the power source.

One or more circulation pumps are connected to each of the tanks with access to the fluid inside said tanks, wherein said pumps are connected by a pipe connection to the external heat exchanger. The circulation pump is designed to move this fluid efficiently through the system, ensuring heat is transported away from the heat-generating chips (GPUs/ASICs) and evenly distributed or directed toward heat exchangers or external radiators.

Preferably, the pump is optimized for low-viscosity circulation (centrifugal or gear). Centrifugal pump is suitable for high-volume flow, and Gear pump is suitable for Consistent flow under moderate pressures. The heat transferring dielectric fluid inside each tank is typically engineered to have low viscosity to reduce drag and allow easy circulation. The pump is positioned downstream from the immersion tank. The pump intake pulls heated dielectric fluid from the tank containing the GPU or ASIC. The pump output pushes the fluid through cooling elements (radiators, heat exchangers) or directly back to a different section of the tank to create circulation loops.

Seals are used to prevent leaks where the pump's moving parts (such as the shaft) interface with its static housing. In systems circulating heat transferring dielectric fluids, this is critical - even small leaks can lead to fluid loss, contamination, or safety hazards. The seals are located inside the pump assembly, particularly around shaft seals, casing gaskets, and dynamic seals. They ensure a tight, long-lasting seal in contact with circulating heat transferring dielectric fluids, minimizing degradation and downtime.

The seals can be made of different materials, such as:
- Fluoroelastomer with excellent chemical and thermal resistance.
- Perfluoroelastomer offering extreme resistance to high temperatures and aggressive chemicals, ideal for long-term immersion in heat transferring dielectric fluids.
- Non-reactive, low-friction material with outstanding dielectric and thermal resistance.

These materials are preferably validated for > 15 years of exposure in dielectric environments (e.g., per API Standard 682, which sets criteria for mechanical seals in chemical processing).

Fluoropolymer-Based Filters (<5 µm) are used in the system. They can be positioned inline, after the circulation pump and before the fluid is returned to the tank or cooling circuit.

Filters can be housed in a dedicated filter cartridge or module, typically made of PTFE or other fluoropolymers, to withstand chemical exposure and high temperatures.

These filters remove particulate contaminants from the heat transferring dielectric fluid as it circulates, preserving:
- Fluid clarity and dielectric strength
- Pump and hardware lifespan
- Heat transfer efficiency

Particles (metal debris, oxidation residues, etc.) can impair cooling performance, clog fine channels, and degrade electrical insulation. The filter traps particles down to 5 microns, a size small enough to eliminate most mechanical wear products. According to IEEE Transactions on Industrial Electronics (2022), this filtration can prolong the fluid's effective lifespan by ~40%.

One or more electrically powered fans can be mounted in the tank, to enhance circulation of the fluid.

The pump is also connected to temperature and flow sensors and AI control system. The sensors are connected to the tank and provide real-time data. This data is used by an AI-based control block, which adjusts the flow rate, pressure, or timing of the pump dynamically. For example, if temperatures spike near a particular ASIC cluster, the AI can increase pump speed to enhance cooling. The AI control system is able to also consider device (GPU/ASIC) computational load requiring a specific level of power draw, environmental conditions, energy cost signals (from logical subblock for real-time oracles measurements, connected to external sensors and/or computer device). This allows optimization not just for thermal safety, but also for energy efficiency and carbon footprint, which is then fed into the tokenomics system that tracks and verifies energy savings and emissions offsets. The comprising AI-based control block comprises a memory, a processor and communication means ensuring contact with the sensors and the GPU/ASIC.

Environmental conditions in the system are typically received via external sensors and/or logical blocks for real-time oracles measurements, depending on what specific parameters are being monitored. Here's how they are typically acquired and integrated:
- Physical Sensors (On-site) - These sensors are directly connected to the system or installed nearby and provide real-time data such as:
   - Ambient temperature
   - Humidity
   - Airflow (for hybrid cooling setups)
   - Barometric pressure (if altitude adjustments are relevant)

These sensors can be:
- Wired into the AI control unit or
- Wireless (IoT) and connected via protocols like MQTT, LoRaWAN, or Wi-Fi.
   - Logical subblock for real-time oracles measurements (Application Programming Interface based (API-based)) - The system can also use logical subblock with software-based real-time oracles to fetch external environmental data from trusted sources. These oracles query:
      - Weather APIs
      - Climate models or regional databases
      - Grid operators (for temperature-sensitive load balancing)

These data are sent to the AI engine via secured RESTful APIs or WebSocket connections, usually processed through a middleware layer for filtering, validation, and normalization.

In a preferred embodiment with two tanks, the sensors in the system form a distributed sensor network for monitoring temperature and environmental parameters, divided into three functional groups: Heating, Cooling, and Ambient. These sensors feed real-time data to the AI-based control block for dynamic thermal and energy optimization.

Heating Sensors are used for:
- Measuring the temperature or energy state of the heat transferring dielectric fluid inside a first tank, and help monitor how much heat is being reclaimed from ASICs/GPUs in that tank.
- Measuring fluid temperature at the radiator's output. It is used to verify how much heat has been dissipated via the radiator. It is useful for comparing with the measurement in the first tank to calculate heat transfer efficiency.

Cooling Sensors are used for:
- Measuring the temperature or energy state of the heat transferring dielectric fluid for a separate loop or circuit with a second tank. Often used in cooling mode or with chiller-assisted setups.
- Measuring temperature before the fluid enters the chiller or cooling system. It indicates how much heat needs to be removed.
- Measuring temperature after cooling, i.e., fluid output after passing through chiller. It shows how effective the chiller or heat exchanger is.
- Measuring chiller fluid inlet in multi-loop systems. It is used to model and control chiller load and CoP (Coefficient of Performance).

Ambient Sensors are used for:
- Measuring outdoor ambient temperature. It helps adjust system performance based on external weather. It is useful for solar efficiency, TEGs, or free cooling decisions.
- Measuring indoor air temperature near the equipment. It helps track thermal build-up in the mining environment. It can be used to trigger fans, open vents, or adjust fluid flow.

The system's temperature sensors can measure temperatures with a very small margin of error-only plus or minus 0.1 degrees Celsius.

For thermal management systems (especially immersion cooling or energy-optimized systems), precise temperature tracking is crucial to avoid overheating or overcooling.

It is preferably complied with international standard IEC 60751: This is an international standard for platinum resistance temperature detectors (RTDs). It specifies the tolerances, calibration methods, and resistance-temperature relationships. Compliance means the sensors follow globally recognized reliability and accuracy guidelines-especially important for high-end industrial or data-center applications.

The AI control system is configured for machine learning algorithms, with which the AI system collects real-time sensor data (temperature, flow, environmental conditions, energy pricing, device load). Then, it dynamically adjusts Pump speed, Flow rate, Cooling mode (e.g., passive vs active), Energy source preference (e.g., when to prioritize solar/TEGs), Load balancing across GPUs/ASICs. This results in smarter energy use, more effective heat transfer, and reduced unnecessary operation of pumps or chillers. Such dynamic AI-driven optimization can result in up to 23% greater overall energy efficiency compared to static or manually configured systems.

The AI logical block monitors temperature sensors, power draw, and workload patterns across devices. It dynamically controls:
- Fluid flow rate
- Radiator activation/deactivation
- Fan or pump speeds
- Immersion levels

This leads to lower power usage and component stress while maintaining target thermal ranges.

The AI logical block utilizes machine learning algorithms to predict optimal cooling strategies and dynamically reconfigure mining hardware power loads.

Electric heaters from the state of the art are considered nearly 100% efficient because all the electrical energy they consume is converted into heat - this is why their Coefficient of Performance (COP) is 1. The system of present invention goes beyond that by using energy that would otherwise be wasted:
Reclaiming heat from ASICs: ASIC devices (used for mining or computation) consume power and emit heat. Instead of letting that heat dissipate uselessly, the system captures and uses it.

All wired connections in the system can be made with suitable cables, for example, cables with polyurethane resin (PUR) sheathing to resist fluid-induced degradation.

The system includes thermal interface materials such as graphite pads, indium foil, flexible graphite sheets, which are stable under immersion conditions.

It is also possible heat to be utilized from power supply units of the digital infrastructure, using the system according to the invention, wherein the power supply unit is arranged in a container with same dielectric fluid as the digital infrastructure. The procedure for utilizing heat generated from said power supply unit follows the same logic as for the digital infrastructure.

It is also possible heat to be utilized from solar panels with backplate, using the system according to the invention, wherein the photovoltaic cells of the solar panels are partly arranged in direct contact with dielectric liquid circulating in a sealed cavity. In alternative variant water can be used.

The combined PVT hardware and retrofit designs enable efficient, non-intrusive thermal integration with existing or new PV systems. They deliver simultaneous electrical efficiency uplift, recoverable thermal energy, and Al-optimized operation without compromising module integrity or safety. The system's measurement and verification protocols ensure that all energy savings, thermal recovery, and PV uplift are transparently monitored, reported, and, where applicable, tokenized credits under the unified EMS-1 optimization framework.

The retrofit backplate assembly for retail PV modules (water or dielectric variants) uses a compliant thermal interface pattern, micro-/mini-channel hydraulics, and a floating hydraulic loop.

The retrofit cooling backplate is designed for integration with standard retail photovoltaic (PV) modules without penetrating or mechanically altering the original laminate. The structural sequence from front to back is as follows:
Glass / cell / EVA (or POE) / factory backsheet → low-modulus silicone thermal-interface lattice → metal cold-plate → frame-mounted manifold.

A low-modulus silicone thermal interface material (TIM) layer with a lattice or bead geometry provides both shear relief and thermal coupling. Its thermal conductivity is typically in the range of 1-3 W/m·K, optimized for compliant contact between the PV laminate and the metal cold-plate.

The cold-plate consists either of:
an aluminum sheet with a bonded serpentine tube (tube outer diameter 8-12 mm), or
an extruded aluminum plate incorporating microchannels with a hydraulic diameter of 1-4 mm.

The cooling circuit connects to a frame-mounted manifold using flexible quick-disconnects.

All edge seals are external and do not pierce the factory laminate, preserving the module's electrical insulation and warranty integrity.

Two categories of coolants are supported, selected according to electrical and environmental requirements:

### • Water/glycol mixtures (20-30 %)

Effective specific heat cp≈3.7-4.2kJ/kg·Kc_p \approx 3.7-4.2 kJ/kg·Kcp≈3.7-4.2kJ/kg·K.

Provide the highest heat-pickup capacity and are suitable for grounded hydraulic loops.

Dielectric fluids (e.g., PDMS, PAO, PFPE) are:
Effective specific heat cp≈1.7-2.2kJ/kg·Kc_p \approx 1.7-2.2 kJ/kg·Kep≈1.7-2.2kJ/kg·K.

High electrical resistivity (≥ 10⁹-10¹² Ω·cm).

When used, flow velocity and turbulence are increased to compensate for the lower heat capacity.

These fluids are preferred for floating or high-voltage PV systems where electrical isolation is critical.

The retrofit system is designed to achieve the following thermal and electrical performance benchmarks:
- PV cell temperature reduction:
   10-25 °C below uncooled operation (up to 30 °C in aggressive cooling modes).
- PV electrical uplift:
   Approximately 4-10 %, following the empirical rule of ~0.4 % power gain per °C of cell temperature reduction.
- Coolant outlet temperature:
   40-60 °C for unglazed configurations.
   60-80 °C for lightly glazed configurations where heat recovery is desired.
- Typical per-module flow rate:
   For a 400 W module, 0.8-2.5 L/min depending on the desired temperature lift (ΔT = 10 → 5 K).

To ensure long-term stability and electrical safety, the system incorporates the following preventive measures:
- Shear-relief TIM pattern that allows differential thermal expansion between laminate and cold-plate.
- UV-stable edge seals to prevent degradation under solar exposure.
- Corrosion-compatible metals (e.g., anodized aluminum or stainless-steel fittings).
- Moisture control in dielectric loops, maintained below 50 ppm using an inline molecular sieve or desiccant filter.
- Double O-ring quick-disconnect fittings for leak-free modular installation and servicing.
- Insulation monitoring for dielectric systems operating near DC potentials, providing early detection of leakage currents or insulation loss.

There is direct-contact (immersion) PV/T module as a glass-glass cassette wherein a dielectric liquid circulates in a thin cavity (0.5-3.0 mm) in direct contact with ≥70% of cell surface area; with integrated drying, expansion, leakage-impedance monitoring, and high-point self-purge manifolds. The core stack is low-iron front glass; discrete tack islands (POE or thin EVA) to immobilize cells; sealed cavity 0.5-3.0 mm with circulating dielectric liquid (PDMS/PAO/PFPE; viscosity 10-50 cSt@25 °C; water ≤50 ppm; resistivity ≥10⁹ Ω·cm); spacer frame; back glass with welded/bonded ferrules. The manifolds & Internals are top high-point self-purging manifold; optional micro-posts (0.3-1.0 mm height, 5-20 mm pitch) to disrupt boundary layers with <0.5% optical shading; on-frame expansion bellows sized to fluid volumetric expansion over -20...90 °C. Sensing & Safety is NTCs on strings; fluid T/P; inline moisture ppm; impedance-to-ground sentinel; leak detectors. Cell max temperature ≤80-85 °C (IEC-like limit).

Key steps of preferred manufacturing method are:
Cell string placement on tack islands → spacer/bulkhead bond → rear glass bond with port ferrules → evacuate ≤10 mbar & 60-80 °C bake-out → back-fill with pre-dried dielectric → circulate through dryer to <50 ppm water → seal; hi-pot, IR, optical haze checks.

Preferred performance targets are:
- Cell ΔT vs. uncooled: 12-25 °C.
- PV uplift: +4-10%.
- Useful heat: 300-600 W□□/m² at 1 sun; outlet 50-75 °C unglazed, 60-85 °C with glazing.
- Uniformity: cell-to-cell ΔT ≤5 K at 1 sun, 25-35 °C ambient.

The solar-driven cooling system couples either collector to an adsorption/desiccant or absorption chiller, governed by a cascaded control: an inner loop holds module ΔT; an outer loop holds chiller generator temperature; a supervisor enforces cell-temperature and safety constraints. It is applicable for Adsorption/desiccant chillers, as it drives 55-70 °C, COPth ≈0.4-0.6, and for Single-effect absorption (LiBr-H₂O), as it drives 70-90 °C, COPth≈0.6-0.8, preferably glazed/high-temp PVT. Actuators can be primary PV-loop pump (VFD); generator-loop pump; three-way mixing/divert valve (to chiller vs. radiator/buffer); cooling-tower/dry-cooler fan; CHW pump; chiller enable. The system comprises sensors including global horizontal irradiance (GHI) and plane of array (POA) solar irradiance sensors, photovoltaic cell or backsheet temperature sensors, PV-loop supply and return temperature and mass-flow sensors, generator inlet and outlet temperature and mass-flow sensors, chilled-water supply and return temperature and mass-flow sensors, condenser-water inlet and outlet temperature and mass-flow sensors, pump and fan power sensors, ambient temperature and relative-humidity sensors, moisture-content sensors measuring fluid humidity in parts per million, and insulation-resistance sensors measuring electrical insulation integrity in megaohms. There is cascaded control established by inner loop, outer loop, feed-forward and supervisor. In internal loop PV field ΔT (Tret-Tsup)(Tret-Tsup) to 3-8 K (adsorption) or 8-12 K (absorption) is held via pump RPM to stabilize cell temperature and heat pickup; In outer loop, is modulated mixing/divert valve to maintain chiller generator inlet setpoint (adsorption 60-70 °C; absorption 75-85 °C). The start is at GHI>300 W/m² or Tbs>40°CT_{bs}>40 °C Tbs>40°C, and Tcell≤80-85°CT_{cell}\le 80-85 °C Tcell≤80-85°C is enforced. Rate-limit under clouds, and dump heat to radiator upon faults (leak, moisture>50 ppm, insulation<50 MΩ, over-temp) are also supervised. In a feed-forward thermal control system, the controller doesn't wait for the temperature to change first (like in feedback). Instead, it predicts the required heat-transfer rate (and thus mass flow rate) based on known external conditions - for example, solar irradiance (GHI). Here the goal is to estimate how much fluid needs to flow through a heat-exchanger to maintain a target temperature rise, given the incoming solar energy. The required mass flow rate is estimated from solar irradiance using the relation where the mass flow rate is equal to the product of the collector area and thermal efficiency multiplied by the global horizontal irradiance, divided by the product of the specific heat capacity of the working fluid and the target temperature difference; expressed as: 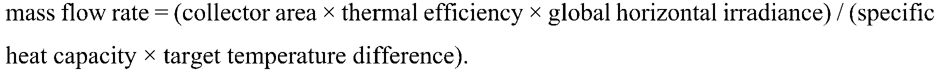 mass flow rate = (collector area × thermal efficiency × global horizontal irradiance) / (specific heat capacity × target temperature difference).

The hybrid chiller or cooling plant is characterized by two distinct categories of performance indicators: thermal COP and electrical COP/SPF, each addressing a different energy boundary. The thermal COP quantifies how effectively the plant converts a thermal driving source into useful cooling. This ratio remains finite and meaningful even when the driving heat source is "free" (e.g., solar or recovered waste heat), because it compares thermal quantities and isolates the thermodynamic performance of the chiller itself, independent of the origin or cost of the thermal input. The electrical COP, also referred to as instantaneous electrical efficiency, relates the useful cooling output to the total electrical power drawn by all components of the plant. This metric represents the system's overall electrical-to-cooling efficiency and allows comparison with conventional electrically driven chillers. Over an extended operating period, the Seasonal Performance Factor (SPF_elec) or Integrated COP is determined by the ratio of total cooling energy delivered to the total electrical energy consumed. This integrated form provides a time-weighted measure of actual field performance, automatically accounting for dynamic variations in load, weather, and solar or renewable contributions. It serves as the most representative indicator of long-term system efficiency. The system performance is evaluated using a set of plant performance metrics that quantify both thermal and electrical efficiency during operation. The thermal performance of the chiller is expressed through the thermal coefficient of performance, defined as the ratio between the useful cooling capacity and the total thermal energy supplied to the chiller generator. This relationship is represented as: 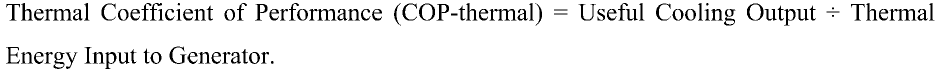 Thermal Coefficient of Performance (COP-thermal) = Useful Cooling Output ÷ Thermal Energy Input to Generator.

This thermal coefficient remains finite even in cases where the input heat is obtained from a "free" or recovered thermal source, such as waste heat or solar heat, ensuring realistic and comparable efficiency assessment. The electrical performance is expressed through the electrical coefficient of performance and the seasonal performance factor, both of which consider the total electrical power consumed by all system components. The electrical coefficient of performance is defined as: 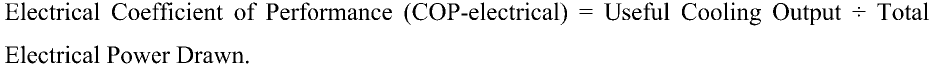 Electrical Coefficient of Performance (COP-electrical) = Useful Cooling Output ÷ Total Electrical Power Drawn.

The seasonal performance factor, which represents the time-integrated ratio of total useful cooling energy to total electrical energy consumption over a defined operating period, is expressed as: 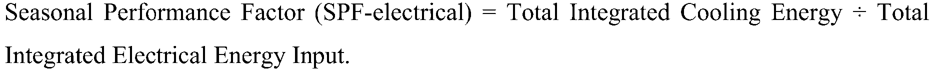 Seasonal Performance Factor (SPF-electrical) = Total Integrated Cooling Energy ÷ Total Integrated Electrical Energy Input.

In these evaluations, the total electrical power draw includes the combined consumption of all auxiliary subsystems, such as photovoltaic or generator-powered circuits, chilled-water and condenser-water pumps, cooling-tower fans, and electronic control devices. Together, these metrics provide a comprehensive assessment of the plant's thermodynamic and electrical efficiency, enabling accurate comparison and optimization of the system's performance under varying operational and environmental conditions.

Measurement & verification (M&V) methods are used to compute PV electrical uplift and system performance (thermal COP, electrical seasonal performance factor), enabling ex-post issuance of avoided-emissions units for the uplift only.

The photovoltaic uplift quantifies the incremental electrical energy gain resulting from cooling the photovoltaic modules compared to their baseline, uncooled performance under identical environmental conditions, and represents the additional energy yield directly attributable to operation of the cooling subsystem; it is calculated as the difference between the electrical energy produced by the cooled modules and the baseline electrical energy predicted as a function of solar irradiance and cell temperature, expressed as: photovoltaic uplift = electrical energy of cooled modules - baseline electrical energy (as a function of irradiance and cell temperature).

Baseline is a fixed pre-commission model tying uncooled PV power to irradiance and temperature.

In addition to tokenized or credited energy and carbon metrics, the system continuously records a set of Cooling Key Performance Indicators (KPIs) that quantify the actual thermal and electrical performance of the cooling subsystem, including the photovoltaic-thermal and chilled-water circuits; these indicators are non-credited, meaning they do not generate tokens or offsets, but are reported for diagnostic, optimization, and performance-verification purposes, and are defined as follows: the thermal power of the photovoltaic-thermal loop is equal to the product of the mass flow rate, the specific heat capacity of the circulating fluid, and the temperature difference between return and supply, while the cooling power of the chilled-water circuit is equal to the product of the chilled-water mass flow rate, its specific heat capacity, and the temperature difference between return and supply; the thermal coefficient of performance is defined as the ratio of cooling power to thermal input, the electrical coefficient of performance is defined as the ratio of cooling power to electrical power draw, and the seasonal or integrated electrical performance factor is defined as the ratio of the time-integrated cooling energy to the time-integrated electrical energy consumption.

The avoided electricity metric quantifies the amount of electrical energy saved by the hybrid or advanced cooling system compared to a conventional reference chiller that would deliver the same cooling capacity under identical environmental and operating conditions, providing a direct measure of the electrical energy reduction achieved through improved efficiency, waste-heat recovery, or renewable integration; it is determined by calculating the total reference electrical energy consumption as the sum of the cooling energy over each time interval divided by the reference chiller's coefficient of performance, which varies as a function of ambient temperature and part-load ratio, and then subtracting the actual auxiliary electrical energy consumed by the system, expressed as: reference electrical energy equals the sum of cooling power multiplied by time divided by the reference coefficient of performance, and avoided electricity equals reference electrical energy minus auxiliary electrical energy.

This indicator quantifies the carbon offset associated exclusively with the photovoltaic uplift, representing the additional electrical energy generated by the cooled photovoltaic modules compared to their uncooled baseline, and measures the corresponding reduction in carbon dioxide emissions achieved when this extra renewable electricity displaces grid-supplied power; it is calculated as the sum of the incremental photovoltaic energy uplift for each measurement interval multiplied by the grid emission factor applicable during that interval, divided by one thousand to convert kilograms of carbon dioxide into metric tonnes, expressed as: total carbon offset in tonnes of CO₂ equals the sum of photovoltaic energy uplift multiplied by the grid emission factor, divided by one thousand.

More specifically, preferred example of the photovoltaic module comprises a front light-transmissive substrate, a plurality of photovoltaic cells disposed thereon, a sealed cavity of thickness 0.5-3.0 mm containing a circulating dielectric liquid in direct contact with at least 70% of a surface of the cells, a rear substrate including integral inlet and outlet ports, and a perimeter spacer frame. The dielectric liquid has resistivity ≥10⁹ Ω·cm and water content ≤50 ppm, and the module is configured to export heat at a temperature between 55 °C and 90 °C. The spacer frame can incorporate an expansion bellows sized to accommodate volumetric expansion of the dielectric liquid over -20 to 90 °C. The module can comprise also micro-posts of height 0.3-1.0 mm and pitch 5-20 mm within the cavity to disrupt boundary layers with optical shading <0.5%. The module can comprise also an inline dehydration cartridge and insulation-to-ground monitor configured to trip operation if moisture exceeds 50 ppm or impedance falls below 50 MΩ. Also, a cooling apparatus for the photovoltaic module can be provided, which has a factory backsheet, comprising a non-penetrative compliant thermal interface adhered to the backsheet, a metal cold-plate with internal flow passages of hydraulic diameter 1-4 mm including turbulence-inducing features of 0.2-0.6 mm; frame-affixed manifolds,and a controller. The coolant is selected from water-glycol 20-30% or dielectric liquid of resistivity ≥10⁹ Ω·cm, wherein the controller maintains a cell-coolant ΔT within 3-12 K. The thermal interface can be a silicone compound of modulus ≤2 MPa and conductivity 1-3 W/m·K arranged in a stress-relief bead lattice. The solar-driven cooling system can comprise one or both of the photovoltaic module and the cooling apparatus, and a thermally driven chiller selected from adsorption, desiccant-evaporative, or single-effect absorption, a three-way mixing/divert valve, a radiator or buffer tank, and sensors measuring GHI, cell temperature, fluid temperatures and flows.

Even more detailed example is for 400 MWp Plant, mid-case, described with:
- PV uplift credits: Baseline 1,300 kWh/kWp·yr → +6% = +31.2 GWh/yr ⇒ ≈12,700 tCO₂/yr (if EF=0.407 kg/kWh).
- Adsorption + unglazed water loop (reporting only): ~300 GWhcool_{cool}cool/yr; seasonal SPFelecSPF_{elec}SPFelec≈14 → aux ≈21.4 GWh/yr; reference electric COP 3.2 ⇒ avoided ≈72.3 GWh/yr (≈29.4 ktCO₂/yr, uncredited).
- Absorption + glazed water loop (reporting only): ~644 GWhcool_{cool}cool/yr; SPFelecSPF_{elec}SPFelec≈17 → aux ≈37.9 GWh/yr; avoided ≈163.4 GWh/yr (≈66.5 ktCO₂/yr, uncredited).

Said construction for utilizing heat from solar panels has the following advantages:
- Direct-contact cooling yields higher, uniform PV power recovery while delivering chiller-grade temperatures.
- Backplate retrofit installs without laminate penetration; works with water or dielectric; stress-relief TIM geometry preserves module reliability.
- Cascaded control protects cells, maximizes chiller performance, and rides through transients.
- Auditable uplift accounting isolates creditable tons (no double counting with cooling savings).

The system is applicable in utility-scale PV plants and commercial roofs, integration with adsorption/absorption chillers for space cooling and process cooling, digital reporting of PV uplift for environmental markets.

Exemplary Ranges & Design Values (enablement) of the features of the system are:
- Cavity thickness (immersion): 0.5-3.0 mm (nominal 1-2 mm).
- Dielectric fluid: viscosity 10-50 cSt@25 °C; resistivity ≥10⁹-10¹² Ω·cm; moisture ≤50 ppm.
- ΔT setpoints: 3-8 K (adsorption), 8-12 K (absorption).
- Generator inlets: 60-70 °C (adsorption), 75-85 °C (absorption).
- Cell temperature hard limit: 80-85 °C.
- Micro-post height/pitch: 0.3-1.0 mm / 5-20 mm.
- Channel hydraulic diameter (backplate): 1-4 mm with 0.2-0.6 mm ribs/chevrons.

The procedure for utilizing heat generated from said power supply unit follows the same logic as for the digital infrastructure and is described below with a preferred example.

The method of operating a solar-driven cooling system, comprises:
(i) regulating pump speed to maintain a collector ΔT within 3-8 K (adsorption) or 8-12 K (absorption);
(ii) independently regulating generator inlet temperature within 60-70 °C or 75-85 °C via a mixing/divert valve;
(iii) computing a feed-forward flow estimate from irradiance by determining the mass flow rate required to achieve a target temperature difference, where the mass flow rate is equal to the product of the collector area, the thermal efficiency, and the global horizontal irradiance, divided by the product of the specific heat capacity of the working fluid and the desired temperature rise; expressed as: mass flow rate equals (collector area × thermal efficiency × global horizontal irradiance) divided by (specific heat capacity × target temperature difference);
(iv) enforcing a cell temperature limit of ≤85 °C; and
(v) upon fault conditions (moisture >50 ppm, insulation <50 MΩ, over-temperature), diverting heat to a radiator and disabling the chiller.

The method of making a photovoltaic module, comprises: placing cell strings on a front substrate using discrete tack islands; bonding a perimeter spacer; sealing a rear substrate with port ferrules; evacuating and thermal bake-out; back-filling a pre-dried dielectric liquid; circulating through a dehydration cartridge until ≤50 ppm water; sealing; and performing hi-pot, insulation, and optical tests.

The method for quantifying additional electrical output of a cooled photovoltaic array, comprises: metering plane-of-array irradiance, cell temperature, array DC power, and coolant temperatures/flow; computing an uncooled baseline model of PV output as a function of irradiance and temperature; determining uplift energy ΔEPV\Delta E_{PV}ΔEPV as the difference between measured and baseline energy; and generating an ex-post electronic record of avoided emissions based solely on ΔEPV\Delta E_{PV}ΔEPV using time-resolved grid emission factors.

Also, chiller COPth_{th}th and electrical SPF for reporting while excluding such values from the avoided-emissions record can be calculated.

In case both internet and cellular links fail, the connected computing devices automatically switch to an offline or "empty-algorithm" mode that sustains computational activity without network validation, thereby maintaining steady heat output for ongoing water production. Upon restoration of connectivity, all data and blockchain logs are resynchronized automatically. The system preferably integrates a Stratum mining communication protocol (used in cryptocurrency mining) with additional logic, data collection, or control layers - such as energy efficiency tracking, carbon tokenization, or blockchain-based rewards.

In one embodiment of the invention, the heat exchanger is plate heat exchanger (generator) and is part of a thermally powered air conditioning system. Formed hot dielectric fluid loop operates between 70-80 °C. The plate heat exchanger facilitates heat transfer from the dielectric fluid to a refrigerant, which is in a dual ejector configuration, including a primary and a secondary ejector, configured to entrain vapor from an evaporator using the vaporized refrigerant. The ejector assembly comprises a primary and a secondary ejector, wherein the secondary ejector is configured to enhance suction and pressure recovery, thereby improving the entrainment ratio and overall system efficiency. An evaporator coil is positioned to cool ambient air via forced convection. A condenser coil is used for refrigerant condensation. The heat exchanger is used for heat recovery by capturing residual heat from the condenser to preheat incoming refrigerant. It can be used also for transfer residual heat to the incoming refrigerant prior to entering the generator, thereby reducing thermal losses and improving system COP for example of up to 0.9. Thus, it is formed a passive refrigerant loop requiring only minimal electrical input for operation. Multiple residential units can receive hot dielectric fluid from a centralized source (e.g., data center or solar thermal array) to power individual ejector-based cooling units, enabling decentralized cooling with centralized heat generation. This embodiment is described with the following method: hot dielectric fluid circulates through a plate heat exchanger to vaporize a refrigerant; the vaporized refrigerant is utilized to drive a dual ejector assembly, entraining vapor from an evaporator; ambient air is cooled via the evaporator coil; the refrigerant is condensed in a condenser; residual heat is recovered from the condenser to preheat incoming refrigerant; and the refrigerant is returned to the evaporator, all with minimal electrical energy input. The use of a thermally powered ejector-based air conditioning system in residential environments, leveraging waste heat or solar thermal energy to provide cooling without traditional mechanical compressors.

While absorption chillers are suitable primarily for large-scale applications such as data centers, AI centers, or mining farms due to their size and complexity, the ejector-based, thermally powered air-conditioning system presented herein is applicable to smaller-scale environments, including residential or light commercial buildings. The described configuration enables the use of a regular wall-mounted AC unit format, powered by low-grade thermal energy (e.g., hot dielectric fluid from computational cooling systems or solar thermal arrays) instead of conventional mechanical compressors. A closed hot dielectric fluid loop circuit circulating thermally charged dielectric fluid (e.g., PDMS, PAO, PFPE) between 70-80 °C. The loop transports recovered or solar-derived heat from the source-such as servers, AI processors, or PVT collectors-to the air-conditioning unit. Plate heat exchanger (generator) serves as the generator section, where heat from the dielectric fluid is transferred to the refrigerant, causing it to vaporize. This vaporized refrigerant drives the ejector assembly, initiating the cooling cycle. There is dual ejector assembly between primary ejector, which utilizes high-velocity vaporized refrigerant to entrain vapor from the evaporator, and secondary ejector, which enhances suction and pressure recovery, thereby increasing the entrainment ratio and improving overall system efficiency. Together, the two ejectors form a dual-stage entrainment system that replaces the function of a mechanical compressor with a passive, thermally driven mechanism. Evaporator coil absorbs heat from the indoor air via forced convection. The entrained refrigerant vapor evaporates, producing cooling for the conditioned space. Condenser coil condenses the mixed vapor from the ejector assembly back into liquid refrigerant, rejecting residual heat to the environment or a secondary recovery loop. Heat-recovery heat exchanger captures residual heat from the condenser and uses it to preheat the incoming refrigerant, thereby reducing thermal losses and improving overall system COP. This provides the system with heat recovery capability, allowing partial utilization of residual energy for domestic hot water or loop preheating. Expansion device regulates the refrigerant pressure before re-entering the evaporator, completing the cycle. Optional circulation pump ensures consistent flow of dielectric fluid between the heat source and the generator when gravity circulation is insufficient.

The operational cycle is:
1. heating phase: hot dielectric fluid circulates through the plate heat exchanger (generator), transferring heat to the refrigerant.
2. ejector drive: the vaporized refrigerant expands and drives the primary ejector, entraining low-pressure vapor from the evaporator.
3. pressure recovery: the mixed vapor passes through the secondary ejector for enhanced suction and pressure recovery.
4. condensation: the vapor mixture is condensed in the condenser coil, releasing heat that can be partially recovered.
5. heat recovery: residual heat from the condenser is recovered via the heat-recovery exchanger to preheat incoming refrigerant.
6. expansion & recirculation: the liquid refrigerant passes through the expansion device, reducing pressure and re-entering the evaporator to absorb heat again, completing a continuous thermally driven cycle.

The energy and performance profile is:
- Thermal COP: 0.75-0.9, depending on ejector efficiency and temperature gradient between the hot fluid and ambient air.
- Electrical load: minimal-limited primarily to the air fan (10-40 W) and the optional dielectric circulation pump (~15 W).

The system therefore forms a passive refrigerant loop requiring only minimal electrical input, relying predominantly on waste or solar thermal energy as the driving source.

Applications are:
- residential cooling: direct replacement or supplement for traditional split-unit air conditioners.
- distributed heat reuse: enables the reuse of waste heat from centralized sources (e.g., data centers or ai farms) for nearby residential cooling.
- solar thermal integration: can operate from rooftop solar thermal collectors, enabling zero-grid cooling during daytime operation.
- microdistrict cooling: suitable for small networks of residential or commercial units sharing a centralized heat source and decentralized ejector-based cooling nodes.

Advantages are:
- Eliminates the need for mechanical compressors and high-power electrical drives.
- Silent operation with very low maintenance requirements.
- Effective utilization of low-grade or waste heat sources (70-90 °C).
- Compatible with environmentally friendly refrigerants such as R1234yf or R600a.
- Provides heat recovery capability, enabling partial recirculation of condenser waste heat to improve system efficiency.
- Scalable design suitable for distributed, thermally powered cooling networks.

Thermal efficiency according to the invention is assessed without requiring per-radiator fluid inlet/outlet sensors, enabling single or multiple radiator efficiency tracking through a lumpsum evaluation process. This is because the primary approach is based on a lumpsum CoP calculation, which uses total device power input, tank or system-wide temperature rise, and a calculation of the rate of heat transfer (power output) in watts (W) from a fluid system - like the immersion cooling tank or radiator loop. This allows to estimate total heat recovered or delivered without tracking fluid flow or temperature across individual radiators. Even in systems with multiple radiators, the default method assumes aggregated heat output (e.g., from tank or environment measurements) and optional breakdown only if per-radiator optimization is desired. Smart contracts and tokenomics also rely on system-level or regional data (from sensors, solar, oracles, etc.), not radiator-specific telemetry.

The system can include solar panels, used for generation of solar energy (P_solar) to convert sunlight directly into electricity and heat - providing an additional, renewable source of energy, which can provide power supply to one or more of the components of the system, for example ASICs/GPUs or any of the pumps and the sensors.

The system can include thermoelectric generators (TEGs), for example Peltier modules, used for energy recovery. TEGs are physically attached to hot surfaces where heat is available - such as outer surfaces of the tank, hot fluid lines (after the ASICs/GPUs but before the heat exchanger), etc. The hot side of the TEG is exposed to waste heat, and the cold side is cooled via airflow or dielectric fluid to maintain a temperature gradient. TEGs generate DC voltage based on the temperature difference (Seebeck effect). The output is:
- Connected to a power management module (DC/DC converter),
- Stored in a battery or used to power sensors, microcontrollers, or IoT modules,
- Optionally fed into the main system's power bus.

Solar panels and TEGs are connected to an energy management system that ensures their combined use. The solar panels generate electricity, which can power system components directly or charge batteries. TEGs, on the other hand, harvest waste heat and convert it into electricity, which supplements the solar energy. The combination of both systems is managed by a control system to optimize overall energy efficiency.

Thus, even though a device might draw only 450 W, it can yield about 432 W of usable heat, or ~96% recovery - and that's before factoring in the solar contribution. So, the effective COP is greater than 1, meaning it outperforms conventional electric heaters in total heat output per unit of grid electricity used.

All thermoelectric generators (TEGs) and solar energy sources are aggregated into one overall power input term. This is because the energy harvested by the TEGs and solar modules both contribute to the same system and are treated as renewable energy sources that reduce the overall need for external power.

CoP (Coefficient of Performance) is a measure of efficiency in thermal systems. It is the ratio of useful heating or cooling output to the energy consumed to produce that effect.

Pump usage (e.g., circulation pumps, coolant pumps) in the system can reduce the system's net CoP by approximately 5-10%. This means the energy consumed by the pumps will slightly lower the overall efficiency of the system, as some energy is spent on pump operation rather than directly on cooling or heating.

At any given reporting interval, the system operates in only one active mode:
- HEAT mode,
- COOL mode, or
- WATER mode.

The total energy consumed by the system within the interval is denoted as ${E}_{total} ≡ {E}_{power}$ and includes all electricity used by pumps, control units, and processing devices such as ASICs or GPUs.

If the installation uses solar (photovoltaic) energy, the amount of PV energy actually used by the load-not exported to the grid-is defined as ${E}_{solar} ≡ {E}_{solar , used} .$

The portion of power drawn from the electrical grid is then calculated as ${E}_{grid} = max \left(0, {E}_{total}-{E}_{solar}\right) .$

This means the grid consumption decreases as more PV energy is used, but it can never go below zero. PV energy is only "credited" when it offsets grid electricity used by the system.

For each mode, the system calculates efficiency using the total electrical energy input, not just grid energy. This maintains physical accuracy and comparability.

In HEAT or WATER mode, the thermal coefficient of performance (COP_th) is defined as: ${COP}_{th} = \frac{Q}{{E}_{total}} ,$ where Q is the useful heating or water-heating energy delivered.

In COOL mode, the actual energy efficiency ratio (EER_act) or cooling COP (COP_c) is defined as: ${EER}_{acl} = \frac{{Q}_{cool}}{{E}_{total}} .$

Here, Etotal remains in the denominator; solar input (Esolar) and any Proof-of-Work value are never subtracted, because they still represent real energy processed by the system. This ensures that the COP and EER reflect total physical performance rather than financial or accounting adjustments.

To evaluate energy and carbon savings, a baseline is established for comparison-representing conventional, grid-supplied energy systems:
- For HEAT or WATER operation, the baseline energy equals the useful thermal energy itself: ${E}_{base} = Q .$
- For COOL operation, the baseline uses a standard reference efficiency (EER_ref): ${E}_{base} = \frac{{Q}_{cool}}{{EER}_{ref}} ,$
where EERref is documented according to standard test procedures or regulations.

The system computes the energy saved relative to the baseline: $Δ E = \left\{\begin{matrix}{Q}_{heat} - {E}_{total} , & HEAT mode \\ \frac{{Q}_{cool}}{{EER}_{ref}} - {E}_{total} , & COOL mode \\ {Q}_{water} - {E}_{total} , & WATER mode\end{matrix}\right.$

If this result is positive (the system used less energy than the baseline), a digital energy-efficiency token is minted in proportion to the saved energy. This represents a verifiable record of net energy savings.

To quantify and tokenize avoided carbon emissions, the system first determines the baseline and actual emissions for each operating interval.

The baseline emissions represent the carbon output of a conventional system that would supply the same heating, cooling, or water-heating energy using standard grid electricity. They are calculated as the product of the baseline energy demand (E_base) and the reference emission factor (EF_base). The factor EF_base typically corresponds to the national or regional average grid-electricity emission intensity expressed in kilograms of CO₂ per kilowatt-hour.

The system emissions represent the actual emissions produced by the hybrid system during the same interval. They are computed as the sum of two components: (a) the product of the grid energy consumed (E_grid) and the grid emission factor (EF_grid), and (b) the product of the solar energy used (E_solar) and the photovoltaic emission factor (EF_pv). The photovoltaic emission factor EF_pv accounts for life-cycle or embodied emissions of the PV energy used; however, when renewable energy certificates or guarantees of origin (RECs or GoOs) are retired for the corresponding PV generation, EF_pv is set to zero to indicate that the solar contribution is carbon-neutral.

The carbon saved by the system is then obtained by subtracting the system emissions from the baseline emissions, i.e., CO₂_saved = CO₂_base - CO₂_sys. In the common case where EF_pv = 0, this simplifies to CO₂_saved = (E_base - E_grid) × EF_grid, meaning that the avoided emissions correspond directly to the reduction in grid-electricity consumption multiplied by the grid emission factor.

Finally, when the calculated CO₂_saved value is positive, the system automatically issues or "mints" a carbon-credit token, denoted, in proportion to the verified amount of carbon saved. The token quantity minted is equal to the positive portion of the CO₂_saved value, formally expressed as Mint = max(0, CO₂_saved). This process creates a verifiable digital record of the carbon savings achieved by each interval of system operation.

For visualization purposes only, the user interface may display a "grid-exposed COP": ${COP}_{grid} = \frac{{Q}_{heat}}{max \left({E}_{grid}, ε\right)} ,$ where ε is a small number to prevent division by zero. This value is for display only-it must never be used in accounting, reporting, or token generation.

So, each time interval has one active mode, only one Q is non-zero. Solar energy affects emissions only, not efficiency. Proof-of-Work or token values are financial, not thermodynamic. COP and EER always use total input energy. Energy and carbon tokens represent verified physical savings.

This ensures that the performance of each operational mode can be measured independently. During an interval, only the energy and heat-transfer terms relevant to the active mode are non-zero; all others are set to zero. For example, when the system operates in HEAT mode, the parameters for cooling and water heating are null.

The System Efficiency Metric of the invention is expressed piecewise, using thermal and electrical efficiency indicators such as COPth (thermal Coefficient of Performance), EERact (actual Energy Efficiency Ratio), and ΔE (net energy differential).

These parameters allow the system's hybrid performance to be evaluated in a more granular and physically consistent way:
- COPth quantifies the ratio between total useful thermal output - including space heating (Qheat), water heating (Qwater), and other recovered heat flows (Fh,Fw) - and the electrical input consumed by the pumps and controllers.
- EERact captures the effective cooling or computational energy efficiency of the immersion subsystem (e.g., ASIC or GPU heat rejection).
- ΔE represents the adjusted energy balance, accounting for renewable input (Psolar) and the system's tokenized or economic energy equivalent (PoWvalue), thus linking physical and digital energy domains.

By separating these quantities, the invention avoids conflating "free" energy contributions (from solar input) or productive outputs (from Proof-of-Work mining) with thermodynamic performance. This yields a consistent, modular framework for evaluating hybrid energy-mining systems that combine immersion cooling, renewable integration, and blockchain-based token economics.

The System Efficiency Metric of the invention is expressed piecewise, using thermal and electrical efficiency indicators such as COPth (thermal Coefficient of Performance), EERact (actual Energy Efficiency Ratio), and ΔE (net energy differential).

These parameters allow the system's hybrid performance to be evaluated in a more granular and physically consistent way:
- COPₜₕ quantifies the ratio between total useful thermal output - including space heating (Qheat), water heating (Qwater), and other recovered heat flows (Fh,Fw) - and the electrical input consumed by the pumps and controllers.
- EER_{act} captures the effective cooling or computational energy efficiency of the immersion subsystem (e.g., ASIC or GPU heat rejection).
- ΔE represents the adjusted energy balance, accounting for renewable input (Psolar) and the system's tokenized or economic energy equivalent (PoWvalue), thus linking physical and digital energy domains.

By separating these quantities, the invention avoids conflating "free" energy contributions (from solar input) or productive outputs (from Proof-of-Work mining) with thermodynamic performance. This yields a consistent, modular framework for evaluating hybrid energy-mining systems that combine immersion cooling, renewable integration, and blockchain-based token economics.

This is explained with the formulas: $PV only via E_grid = E_total - E_solar in {CO}_{2} ; keep E_total in denominators$ $Credit PV only via E_grid = E_total - E_solar in {CO}_{2} ; keep E_total in denominators .$ wherein
PV = Photovoltaic
E_grid = Grid energy share
E_total = Total electrical energy consumption
E_solar = Solar energy input
CO₂ = CO₂ emission context

The Overall System COP (Coefficient of Performance) of the invention measures the total efficiency of a hybrid energy-mining system by comparing all useful thermal outputs-such as space heating (Q_heat), water heating (Q_water), and other flows (F_h, F_w) - against the net energy input. This adjusted COP reflects both the system's energy reuse and blockchain productivity, offering a more accurate and fair efficiency metric for setups combining immersion cooling, renewable integration, and tokenized carbon/electricity systems.
wherein $COP = \frac{Useful Output \left(Heat or Cooling\right)}{Energy Input}$
Q_heat = Heat delivered to radiators (space heating)
Q_water = Heat used for water heating (EMS-Tank2 or similar)
F_h = Extra heating flows (e.g., floor heating, thermal storage)
F_w = Optional water recovery or re-use contributions

This is a key innovation in the system because:
- Mining generates tokens with real-world economic value.
- So, part of the power used by ASICs is not waste - it's an economic output.
- COP is more realistic and fairer in the hybrid setup.

The CoP specifically for heating and cooling in this system is calculated using the following formulas:
Heating Coefficient of Performance: ${COP}_{heating} = \frac{{Q}_{heat} + {Q}_{water} + {F}_{h} + {F}_{w}}{\left({P}_{ASICs}+{P}_{pumps}\right) - {P}_{solar}}$
- Qheat : The heat output from the ASICs or other devices being cooled (heat that needs to be removed).
- P_solar = Solar energy power
- P_pumps = Power consumed by pumps, fans, control systems
- Qwater : Additional heat contribution or removal by water or liquid circulating in the system.
- Fh: Heat flux or heat exchange related to other heat sources/sinks in the system.
- Fw: Heat exchange due to working fluids or thermal energy storage.
- PASICs: The electrical power consumed by the ASICs (or GPUs).
- Ppumps: The power consumed by the pumps in the system.
- Psolar: The power harvested from solar energy or TEGs, subtracted from the total power requirements to reduce the need for external power (this is the renewable energy contribution).

This formula essentially expresses the overall efficiency of the system for heating purposes, accounting for all heat energy inputs and losses, including the impact of renewable energy.

It can alternatively be expressed with this: $COPth = Qheat / Etotal ; ΔE = Qheat - Etotal$ $CO 2 _saved = \left(Qheat-Egrid\right) ⋅ EFgrid \left(if EFpv=0\right)$

Cooling Coefficient of Performance: ${COP}_{cooling} = \frac{{Q}_{cool} + {Q}_{water} + {F}_{c} + {F}_{w}}{\left({P}_{ASICs}+{P}_{pumps}\right) - {P}_{solar}}$
- Qcool: The cooling output from the system (heat being removed from the components).
- Qwater: Again, water's involvement in heat exchange.
- P_ASICs = Power used by the mining devices
- Fc: Cooling flux or additional cooling provided by other components or systems.
- Fw: Similar to the heating formula, this refers to additional thermal energy exchange due to fluids or external factors.
- The denominator here is similar to the heating CoP formula, where you subtract Psolar to account for energy from renewable sources.

This formula expresses the system's cooling efficiency, accounting for all energy inputs and the impact of renewable energy.

It can alternatively be expressed with this: $EERact = Qcool / Etotal$ $ΔE = Qcool / EER_ref - Etotal ; CO 2 _saved = \left(Qcool/EERref-Egrid\right) ⋅ EFgrid$

These formulas for heating and cooling CoP show how the system optimizes thermal management. The power consumption of ASICs and pumps (which consume energy) is balanced by the energy recovered from renewable sources (like solar and TEGs). The overall system efficiency (CoP) is a key metric to understand how effectively the system is utilizing the energy available.

This makes the system more energy-efficient while keeping heat dissipation and cooling under control.

TEG performance is often monitored via embedded sensors reporting voltage, current, and power output to the AI-based control block. AI-based control block aims to optimize the fluid flow and surface cooling to maintain a higher temperature difference. In present system it is quantified by oracles and IoT sensors. According to the present invention, if the TEG-generated energy displaces grid power, it is used to generate carbon offset tokens.

Measuring the Coefficient of Performance (COP) for a heating or cooling system using immersion cooling with ASICs or GPUs, when using one or more radiators is shown below:
A) Measuring the COP with One Radiator (Single Loop) with only one radiator or a single closed-loop system can be made with the following methods:
   1. Lumpsum Measurement (simplified):
      ∘ measure total electrical power consumed by the device (e.g., ASICs, typically 95-99% of that power turns into heat).
      ∘ or track the temperature rise in the immersion tank over time. ${Q}_{heat} = Mass \times {C}_{p} \times Δ T / time$
         - *Cₚ*: Specific heat of the immersion fluid
         - △*T*: Temperature change
         - Mass: Mass of fluid
   2. Calculate COP (No need for radiator inlet/outlet temperature sensors): $COP = \frac{{Q}_{heat}}{Power Input}$
B) Measuring Heating System COP with Multiple Radiators with multiple radiators (parallel or serial) can be made with the following methods:
   1. System-Wide (Traditional) COP
      - Total Power Input: ${E}_{grid} = {E}_{total} - {E}_{solar}$ Credit PV only via E_grid = E_total - E_solar in CO₂; keep E_total in denominators
      - Total Heat Output:
         ∘ Either:
            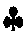 Sum of all radiator heat outputs, if measured per radiator, or
            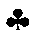 Use tank temperature rise or environmental temperature sensors to get total system heat output.
      - Formula: ${COP}_{heating} = \frac{\sum {Q}_{rad} + {Q}_{water} + {F}_{h} + {F}_{w}}{{P}_{total}}$
      - *Q*_{rad}: Heat from radiators
      - *Q*_{water}: Heat stored in fluid/tank
      - *Fₕ*, *F_{w}*: Optional extra energy flows (e.g., domestic hot water or floor heating)
   2. Multiple Radiators - Simple Total
      - Just sum up all heat outputs from each radiator: ${Q}_{total} = {Q}_{rad 1} + {Q}_{rad 2} + {Q}_{rad 3} + …$ Then: ${COP}_{heating} = \frac{{Q}_{total}}{\left({P}_{ASICs}+{P}_{pumps}-{P}_{solar}\right)}$

GPU and ASIC Immersion Cooling Calibration & Heat Distribution is made by the following steps:
- Run one ASIC in the immersion fluid for 10-15 min.
- Measure initial and final temperatures of the tank or fluid: ${Q}_{heat_ 1 Device} = \frac{{M}_{fluid} \times {C}_{p} \times \left({T}_{final}-{T}_{initial}\right)}{t}$ Confirm that almost all the electric input (~95-99%) turns into heat (e.g., 450 W ASIC should produce ~432-445 W heat).

Most setups only need lumpsum COP, which simplifies the analysis. No matter if one radiator or multiple radiators are used, the total power in vs. total heat out is measured as lumpsum.

The system according to the invention is a multi-mode system that uses GPUs or ASICs (typically for mining or compute) as heat sources for heating, cooling, and water heating. The system uses immersion cooling tanks (EMS-Tank1/2), radiators, pumps, and fans to dynamically manage heat flow depending on the season and room conditions.

Herein are shown some exemplary embodiments:

### a) Heating System (Winter Mode)

Goal: Keep room warm without overheating ASICs or tanks.

Conditions & Actions:
1. ASIC core too hot, room warm
   → Start internal fluid circulation (inside flow pump) in EMS-1 or EMS-2.
   → Turn on tank fans to improve internal heat dissipation.
2. ASIC core too hot, room cold
   → Increase external pump flow to the radiator, sending more heat to the room.
3. EMS-Tank1/2 too hot, room warm
   → Circulate fluid internally (with fans) to avoid local overheating.
4. EMS-Tank1/2 too hot, room cold
   → Increase external pump flow to distribute that heat to the room.
5. Radiator temperature too high
   → If you still need room heating, do nothing (radiator doing its job).
   → If not, reduce flow to avoid overheating the room.
6. Room below desired temp
   → Increase external pump flow to push more heat to radiators.
7. Room above desired temp
   → Stop heating, switch to cooling mode.
8. Room below setpoint
   → Stay in heating mode.

### b) Cooling System (Summer Mode)

Goal: Keep room and components cool, prevent ASIC or tank overheating.

Conditions & Actions:
1. ASIC core too hot, room cool
   → Start internal fluid circulation (pump + fans) to cool down ASICs without adding heat to the room.
2. ASIC core too hot, room warm
   → Increase external pump flow to external radiator or chiller for stronger heat rejection.
3. EMS-Tank1/2 overheating, room cool
   → Circulate internally with fans-avoid dumping heat into a cool room.
4. EMS-Tank1/2 overheating, room warm
   → Raise external pump flow to push excess heat away from tank.
5. Chiller output low
   → Optimize chiller performance (e.g., adjust flow, tune cycle timing).
6. Room above desired temp
   → Activate full cooling mode.
7. Room below desired temp
   → Switch back to heating mode (or idle).

### c) Water Heating System

Goal: Use surplus ASIC heat to heat water (domestic hot water or similar).

Conditions & Actions:
1. ASIC core too hot
   → Transfer surplus heat to EMS-Tank2 (designated for water heating).
2. EMS-Tank2 overheated, water already hot enough
   → Circulate fluid and turn on fans in EMS-2 to stabilize temp (no more heat needed).
3. EMS-Tank2 overheated, but water still cold
   → Increase external pump flow to deliver more heat to water system.
4. Water temp too low
   → Prioritize sending heat to EMS-Tank2 for water heating.

The invention creates a dynamic, efficient, and season-adaptive system by:
- Recycling GPU/ASIC waste heat for room and water heating in winter.
- Redirecting and removing heat efficiently in summer.
- Using temperature-based rules for switching between pumps, fans, and modes.
- Keeping everything within safe operating temperatures while maximizing utility.

Boost Converters, for example DC-DC, can be used to step up (increase) the voltage from a Thermoelectric Generator (TEG) so it can be effectively used, typically alongside solar input (P_solar) in the system. The DC-DC boost converter raises the low voltage output from a TEG to a higher, usable level. It's integrated into the solar inverter, meaning the TEG and solar systems can work together efficiently. The converter draws power directly from the TEG - it doesn't need any external power supply to run. Built-in compensation circuits ensure the output voltage remains stable, even when the connected load varies (which is common in dynamic systems like present invention). The converter is highly efficient, typically using less than 5-10% of the TEG's power output to function. his keeps net energy losses low, so almost all of the TEG's power contributes to the system's performance (e.g., heating, tokenization, or microgrid support). This boost converter allows your low-voltage TEG to contribute real power to the system without needing extra energy to run, and does so efficiently and stably-even with fluctuating loads.

Because regulations around carbon credits vary by jurisdiction, the system of the invention issues credits based on the geographical location of deployed hardware and can even make adjustments based on the type of green energy the business is running. This creates a decentralized set of smart contracts on the Polygon blockchain, triggered by verified data from the invention stratum mining pool.

When miners are paid, key data is aggregated and published to a smart contract. This data must reflect real-world activity, ensuring that token issuance is strictly proportional to actual energy savings. An oracle account publishes this data, and can involve multiple signers and allow for community verification and even potentially include security deposits contingent on the truthfulness of the information as the project grows and security is further enhanced.

This oracle system ensures data integrity while enabling scale. Based on mining revenue, a cap is set on the number of carbon credits that can be issued. Bonus tokens may be awarded for users running especially efficient or renewable-powered setups as it is understood that many businesses will use their setup for more than just mining and they should be allowed to track that to some extent within reason.

The token distribution is based on miners' shares and is encoded in a Merkle tree structure-a cryptographic method that enables massive scalability by hashing data into a single root. This allows a single blockchain transaction to represent thousands or millions of token distributions, minimizing gas fees.

Users can redeem their tokens at any time by publishing a "merkle proof" showing they are part of the published tree. The user may proceed in trading them, redeeming them for tax offsets by nullifying them, or sending them to authorized registries. Because governments often back the value of carbon credits with tax incentives, these tokens hold real-world value even without a speculative market.

Regional token types can be created for specific markets and regulations, enabling localization and regulatory compliance. Unlike many speculative tokens, these tokens derive value from real, measurable actions.

Dynamic tokenomics refers to a flexible and responsive token generation and distribution system. Instead of having a fixed rule for how tokens are created, it adjusts based on real-world data.

Real-time oracles are external data feeds that supply blockchain systems with real-world information. In this case, they provide up-to-date data on energy production and carbon emissions.

The oracles fetch region-specific data such as:
- Energy mix - the percentage of electricity generated from different sources (e.g., coal, wind, gas, solar) in a specific region at a given time.
- Carbon intensity - the amount of CO₂ emissions produced per kilowatt-hour of electricity (CO₂/kWh), which varies by region and time of day.

Real-time oracles supply current data about the energy mix and carbon intensity in a specific region.

The system calculates the carbon footprint or carbon savings of a given process, such as:
- energy consumption by servers, cooling systems, or other equipment,
- the carbon intensity of the electricity used.

Based on these calculations, blockchain-based carbon tokens are minted or assigned. Each token represents a specific amount of carbon emissions either avoided or generated.

These tokens can be:
- used to offset carbon footprints,
- traded on carbon markets,
- integrated into sustainability-driven business models.

The system features a built-in blockchain interface having a logical block configured to write data to blockchain (e.g., carbon emissions, energy usage) and also to receive input from it (e.g., token balances, smart contract actions).

Real-time oracles are tools that pull trusted data from the outside world (off-chain) and deliver it to the blockchain (on-chain). In this system, oracles automatically and continuously query verified APIs (Application Programming Interfaces) to fetch accurate, up-to-date data from reliable sources, namely to obtain:
- Regional carbon intensity (gCO₂/kWh): This is the amount of carbon dioxide emitted to generate one kilowatt-hour of electricity in a specific region. It changes throughout the day depending on the energy mix (e.g., more solar at noon = lower carbon intensity).
- Local energy prices: Real-time prices of electricity in the given region. Useful for economic optimization and cost tracking.
- Grid composition (renewables vs fossil): The ratio or percentage of renewable sources (solar, wind, hydro) versus fossil fuels (coal, gas, oil) currently supplying the power grid.

Tokens are minted from the blockchain interface based on energy savings or environmental performance. This incentivizes carbon-efficient operation and enables integration into sustainability platforms.

Unlike many cryptocurrencies with a fixed hard cap, the token used in this system has an unlimited supply. However, issuance is strictly regulated by verified efficiency gains. Only measured energy savings and carbon offsets can mint new tokens, preventing inflationary dilution without actual, provable improvements in CoP.

The system can be configured to distribute tokens only once the CoP surpasses a chosen level. For example, tokens may be awarded exclusively if the CoP exceeds 1 (matching or outperforming a standard electric heater) or if CoP meets typical heat pump performance (e.g., CoP>3). This approach incentivizes higher efficiency by:
- Limiting issuance to conditions where genuine savings are demonstrated.
- Preventing gratuitous token inflation unless real CoP thresholds are met.
- Aligning token distribution with the system's actual environmental and economic benefits.

The coefficient of performance is calculated as: $CoP = Cooling Output \left(kW\right) / Power Input \left(kW\right)$

The system supports:
- Lump-sum measurements across the system
- Per-radiator analysis (if enabled with optional sensors)
- Passive or semi-passive fluid management (no need for complex plumbing)

This makes the system cost-effective for both small and large installations.

The system calculates a regional multiplier based on local data vs the global average. For example, if a region's electricity is 20% more expensive, then for every 1 kWh a user saves, they get 1.2 tokens - to reflect higher economic value. Same logic applies to CO₂ - areas with dirtier grids (higher CO₂/kWh) reward more offset tokens.

The system provides automatic price adjustment via oracle updates. Smart contracts use oracles to automatically update the multipliers daily or hourly. This keeps the system fair and accurate, even as: Electricity prices fluctuate, Carbon intensity improves (e.g., more renewables in a region).

Users/miners can: see their regional multiplier (based on live data), track how their token earnings vary with time and location, watch how carbon offset potential evolves (e.g., if their grid gets greener).

The system uses a scalable and efficient sidechain built to enhance the crypto ecosystem. It operates in parallel with crypto ecosystems, such as Ethereum^{®}, and offers significantly lower transaction fees, faster confirmations, and full compatibility with existing tools and smart contracts of existing cryptographic environments (global, decentralized computer that executes code in a predictable and secure way to run smart contracts on a blockchain), thus making it ideal for decentralized applications (dApps) that need speed and affordability. This allows fast and cheap transactions and proof of stake security.

The system has a fraud detection system based on randomly spot-checking verification of a sample of transactions, which allows ~99.5% fraud prevention.

Herein are some exemplary embodiments of use of the system:
Example 1: A high-performance computing (HPC) center uses the system of the invention to reduce cooling costs by 40%, while generating carbon tokens based on a renewable energy-rich regional grid.
Example 2: An industrial control center installs the system of the invention with basic CoP monitoring, integrating AI optimization to prolong hardware lifespan and mint tokens for every MWh of clean cooling achieved.
Example 3: A small blockchain mining facility retrofits the system of the invention with full tokenomics and CoP sensors per radiator, allowing high-granularity rewards and automatic carbon offsetting.

In one embodiment of the invention, facilities employing dielectric-fluid or thermal-oil circulation loops for heat transfer may additionally integrate an Organic Rankine Cycle (ORC) subsystem to regenerate electrical energy from waste heat.

The recovered thermal energy from computational, industrial, or data-processing equipment is thus converted into usable electrical power, forming a closed regenerative energy loop that improves overall facility efficiency. Principle of operation is: The dielectric fluid or oil loop operates as the heat source for the ORC system.

The fluid, typically maintained within a temperature range suitable for low- to medium-grade ORC conversion, transfers thermal energy to a working fluid (e.g., R245fa, isobutane, or equivalent), which expands through a turbine or expander to drive an electrical generator.

The generated electricity can be used on-site to partially or fully offset grid-based power consumption. The model enables RWA (Renewable Waste-heat Asset) token issuance only under specific operational conditions designed to ensure measurable and verifiable sustainability impact. Token generation is permitted exclusively when the re-generated electricity directly contributes to improved system efficiency by displacing grid or fossil-based power consumption. For example:
If a 400 kW facility regenerates 40 kW of electrical energy through ORC, the effective grid draw is reduced to 360 kW. In such case, the facility is considered to have achieved an efficiency improvement, and the corresponding RWA tokens may be issued.

Prior to token issuance, each participating facility must undergo a baseline determination period (look-back period) to establish a reference consumption level. If the facility subsequently expands capacity (e.g., from 400 kW to 500 kW), a minimum six-month look-back is applied to fix the baseline. This mechanism locks historical energy usage and prevents artificial increases in baseline consumption intended to exaggerate future efficiency gains ("greenwashing"). The exact duration of the lock period may be adjustable according to program rules or regulatory standards.

Facilities regenerating electricity through ORC are required to self-consume the re-generated electricity within the same operational domain. The re-generated energy must be used to offset existing grid consumption rather than to expand production capacity. Accordingly, the regenerative output (e.g., 40 kW) is subtracted from the baseline (e.g., 400 kW → 360 kW net consumption). Only this verified displacement of external power qualifies for RWA token issuance.

If a facility sells or exports the re-generated electricity to an external buyer or the public grid, token issuance is prohibited under the base RWA model. This restriction ensures that tokens represent true internal efficiency gains and not dual-counted renewable credits or unrelated market energy sales.

The ORC RWA Generation Model is applicable across various infrastructures including:
- Data centers, AI centers, and cryptocurrency mining facilities where continuous heat generation occurs;
- Industrial plants employing liquid-cooling systems; and
- Combined heat and power (CHP) environments that can integrate ORC modules for waste-heat recovery.

This model provides a verifiable, blockchain-recorded mechanism for recognizing on-site thermal-to-electric efficiency improvements, while embedding strict controls against baseline inflation and unverified environmental claims.

In one embodiment of the invention, the control unit or the main embedded host board (for example, an ESP32-S3 microcontroller platform) is equipped with a mobile network failover system that provides backup internet connectivity in case of primary network interruption. The backup system may include an integrated nano-SIM slot and a cellular modem module, such as a Quectel EC25, SIMCom 7600, or an equivalent 4G/5G communication device. The firmware of the controller is configured to continuously monitor the connectivity status of the primary internet interface (e.g., Ethernet or Wi-Fi). Upon detecting a connection failure or abnormal latency, the firmware automatically initiates a failover sequence, activating the cellular modem and re-establishing the network link via the mobile data network. This ensures uninterrupted data transmission for systems that require constant online access, such as cryptocurrency mining devices, data centers, or AI compute clusters. In the case of cryptocurrency-mining or token-generating installations, the internet connection is essential for maintaining synchronization with the distributed ledger network. The failover functionality prevents operational downtime and loss of computational work or token rewards. All operational data, including system performance metrics, energy consumption, temperature readings, and carbon or energy-savings information, may be aggregated and hashed into one or more cryptographic records (hashes). These records are periodically published to a blockchain network, providing immutable verification of system activity and energy provenance. The same backup-connectivity and blockchain-logging architecture can be applied to Data Centers and AI Centers, where similar continuous connectivity is required to maintain distributed processing tasks, workload verification, or tokenized energy-credit systems. In such implementations, the cellular failover mechanism provides redundant network assurance, while the blockchain layer maintains a tamper-proof audit trail of operational and environmental data.

### Embodiment - concrete curing processes

In one embodiment of the system for thermal management and energy optimization in digital infrastructures, the recovered thermal energy from the heat-transferring dielectric fluid is utilized in an integrated renewable heat and tracking application for concrete curing processes. This embodiment combines phase-switch chemical conversion (PSC), photovoltaic-thermal (PVT) modules, absorption heat systems (AHS/AHT), sand-based thermal storage, and a Renewable Waste-heat Asset (RWAS) blockchain tracking layer to form a unified energy recovery and verification network. In one configuration, low-grade waste heat (~60-70 °C) from the dielectric fluid loop exiting the digital infrastructure tanks is continuously recovered and routed through an absorption heat system (AHS) to raise the temperature to ≥ 90 °C for open-environment concrete curing. Supplementary heat is supplied by PVT panels operating on solar energy, which contribute both thermal and electrical energy to the system. Optional buried and insulated sand-storage modules act as thermal batteries, storing excess daytime heat and releasing it during evening curing operations. The digital infrastructures providing the waste heat operate on solar-powered electricity, thereby forming a closed renewable-energy loop. In another configuration, the system employs a phase-switch chemical (PSC) or chemical heat transformer (CHT) for generating high-temperature steam (up to ~180 °C) from the recovered waste heat. The steam is directed to a sealed or enclaved concrete-curing chamber, enabling high-temperature curing cycles equivalent to those powered by fossil-fuel boilers. Excess thermal energy may be stored in high-temperature sand batteries for later reuse during off-peak periods.

The AI-based control block receives real-time temperature and flow measurements from the sensors in the dielectric-fluid tanks, together with data on environmental conditions, energy-mix composition, and carbon-intensity signals obtained from real-time oracles. The control logic dynamically determines the optimal pump speeds, heat-transfer direction, and storage charge/discharge balance to maintain the required curing temperature with maximum efficiency. The coefficient of performance (COP) of the system is continuously calculated and updated in the logical block of the AI control system based on measured thermal outputs and electrical inputs.

The digital active generation interface is a hardware and software subsystem installed within each digital infrastructure unit, configured to collect real-time operational and energy data, communicate with the AI-based control block, verify energy efficiency and carbon offset metrics, and initiate the issuance of digital environmental assets through a blockchain-based control layer.

The interface operates as a decentralized verification node, allowing each computing device to autonomously record its performance, contribute verified data to the blockchain ledger, and receive corresponding Energy Efficiency and Carbon Reduction Tokens when defined performance thresholds are met.

The interface comprises a microcontroller or embedded processor, one or more data acquisition chips connected to temperature, flow, and power sensors, a non-volatile memory module for temporary data storage, and a communication transceiver (Ethernet, Wi-Fi, or 4G/5G modem) enabling real-time exchange of data with the AI-based control block and the blockchain verification layer.

Functionally, the digital active generation interface performs the following operations:
1. Data acquisition and processing:
   It continuously collects hardware-level parameters, including temperature, coolant flow rate, electrical power draw, computational load, and thermal output. These signals are processed by the embedded processor to calculate instantaneous and cumulative energy efficiency indicators.
2. Local verification of performance metrics:
   The interface compares measured efficiency parameters-such as thermal or water-generation coefficient of performance (COP), recovered heat output, and power consumption-against predefined baseline thresholds stored in its memory.
3. AI communication and control feedback:
   Through secure two-way communication, it transmits verified operational data to the central AI-based control block and receives optimization commands related to pump speed, workload distribution, or thermal balancing.
4. Blockchain integration and digital asset generation:
   Upon confirmation that the performance metrics exceed the baseline, the interface digitally signs the data using an onboard cryptographic module (e.g., TPM or secure element) and transmits it to the blockchain layer via a smart-contract protocol. This triggers the automated issuance of digital environmental tokens, including Energy Efficiency Tokens and Carbon Reduction Tokens, which are linked to the verified energy and carbon savings of that specific hardware unit.
5. Logging and synchronization:
   All sensor readings, cryptographic signatures, and token-issuance records are stored in the local memory and periodically synchronized with the distributed ledger for immutability, auditability, and transparency.

Through this combination of embedded hardware, secure data handling, and smart-contract automation, the digital active generation interface enables each computing node to act as an autonomous verification device - bridging the physical energy-efficiency data of immersion-cooled systems with the blockchain-based incentive and accountability framework of the invention.

So, the digital active generation interface installed in each digital infrastructure collects verified data from the AI control block regarding energy efficiency and carbon offset performance. Token issuance is based on verified waste-heat utilization rather than fossil-fuel combustion, representing the renewable replacement value of the curing energy. The microcontroller network embedded in the curing facility tracks thermal output, curing-chamber temperature, and heat-flow stability, and transmits this data to a blockchain-based platform. The platform records operational data, validates energy reuse, and issues RWAS tokens corresponding to the measured renewable or waste-heat contribution.

The integrated embodiment comprises:
- a chemical heat transformer (CHT) configured to upgrade low-grade waste heat (~75 °C) from the dielectric-fluid loops to high-grade thermal energy;
- a thermal buffer storage unit (sand, molten salt, or water-based) employing a stratified temperature gradient to allow continuous input from the CHT and intermittent charging from renewable-powered electric heaters;
- a thermal-oil distribution loop for transferring upgraded heat (180-200 °C) to downstream subsystems including ORC generators, absorption chillers, district-heating networks, and industrial curing units;
- and a blockchain-enabled platform for monitoring energy flows, tokenizing carbon credits and electricity generation, publishing operational data for transparency and compliance, and facilitating tokenized electricity-credit trading.

The blockchain layer supports fractional token issuance to downstream consumers of recovered heat, including industrial or residential users, based on verified consumption data, ensuring that token distribution aligns with measurable carbon-offset contributions.

This embodiment maximizes industrial energy efficiency by coupling digital-infrastructure waste-heat recovery with renewable sources; enables on-site power generation and optimized grid interaction; provides verifiable carbon-offset tracking and tokenized energy assets; ensures regulatory transparency and fraud prevention through blockchain verification; and creates economic incentives for sustainable operation of data centers, AI facilities, and industrial curing plants. In this manner, the system extends beyond digital cooling optimization to form a comprehensive renewable-heat recovery and verification framework that simultaneously manages, upgrades, and monetizes waste heat while supporting sustainable industrial manufacturing processes such as concrete curing.

### Embodiment - coal-processing and drying operations in mining facilities

In another embodiment of the system according to any of the preceding claims, the integrated renewable heat and tracking model is applied to coal-processing and drying operations in mining facilities, where coal or lignite is conventionally dried using steam generated from solid-fuel combustion. In a prefer example of this embodiment, the low-grade waste heat recovered from the dielectric-fluid cooling loops of the digital infrastructure, and optionally supplemented by renewable PVT or ORC-generated heat, is utilized to produce steam or hot air for the drying of raw coal.

The thermal output from the chemical heat transformer (CHT) or phase-switch converter (PSC) is upgraded to approximately 120-180 °C, sufficient to replace or substantially reduce the use of fossil-fuel-fired boilers. A thermal buffer storage unit, preferably of the sand or molten-salt type, maintains stable temperature and flow for continuous drying operation during off-peak or low-computational-load periods. All operational data, including recovered heat utilization, fuel displacement, and emission reduction, are monitored by the AI-based control block and transmitted to the blockchain-based verification platform described herein. Token issuance under this embodiment follows the Renewable Waste-heat Asset (RWAS) framework, wherein digital tokens are issued proportionally to the measured reduction in solid-fuel consumption and the corresponding verified carbon-offset value. This implementation provides a quantifiable environmental benefit by replacing traditional solid-fuel steam generation with verified renewable and waste-heat utilization, while preserving the same functional drying output for the mining process.

### Embodiment - modular and scalable water production apparatus

In one embodiment of the invention, a modular and scalable water-production apparatus is provided, configured to convert low-grade waste heat generated by immersion-cooled digital infrastructures-including cryptocurrency-mining rigs, data centers, and high-performance computing clusters-into usable fresh water.

The system operates entirely off-grid, requires no external water input, and can be deployed across residential, commercial, industrial, or agricultural environments.

The architecture of the invention further integrates a blockchain-based measurement and incentive subsystem that issues digital environmental tokens in proportion to verified water-production efficiency and corresponding carbon-emission reductions.

The system recovers waste heat from dielectric-fluid cooling loops used in immersion-cooled computing devices.

This recovered thermal energy, typically in the range of 50 °C to 75 °C, is transferred through a heat exchanger to drive one of two alternative water-generation processes:
1. Sorption Atmospheric Water Harvesting (SAWH) - a hygroscopic or desiccant-based process in which moisture from ambient air is absorbed and later released by thermal regeneration using waste heat; or
2. Hybrid Sorption-Condensation Process - combining a sorption stage for moisture capture with a condensation stage for vapor recovery and liquid collection.

In both cases, ambient air serves as the only source of water vapor, enabling fully autonomous, off-grid water production using low-grade computational waste heat as the energy driver.

The physical configuration of the water-production apparatus includes:
- Heat Source: dielectric cooling fluid circulating through immersion tanks of computing hardware.
- Heat Delivery: a plate-type or coil-type heat exchanger that transfers heat from the dielectric fluid loop to the sorption or hybrid module.
- Condensation Core:
   ∘ in sorption mode, the desiccant bed is regenerated with waste heat;
   ∘ in hybrid mode, the sorption unit captures humidity followed by an active or passive condenser that converts vapor into liquid water.
- Water Collection and Storage: a sealed basin or reservoir fitted with integrated level and temperature sensors.
- Filtration and Post-Treatment (optional): modular components such as UV sterilization, activated-carbon filtering, and mineralization cartridges for potable or technical water quality.
- Safety and Overfill Controls: sensor-based logic halts dielectric-fluid supply or computing load when overfill is detected-fully stopping or throttling heat generation depending on the device type.

The system operates continuously without dependence on internet connectivity. A cellular backup communication subsystem-for example, a 4G/5G modem with nano-SIM and embedded LTE module such as a Quectel EC25 or SIMCom 7600-ensures telemetry and blockchain data continuity.

If both wired and cellular connections fail, the connected computing devices automatically enter an offline or "empty-algorithm" mode, maintaining computational activity to provide steady heat for water generation.

All performance and environmental data are cached locally and synchronized automatically to the blockchain ledger once connectivity is restored.

Water output scales linearly with the available waste-heat input:
- a 6 kW computing unit produces roughly 144 kWh of thermal energy per 24 h;
- the thermal coefficient of performance (COP□□) averages 3 L of water per kWh under moderate ambient humidity.

Representative capacity classes include:
- Compact module: 5-20 L/day;
- Standard module: 50-500 L/day;
- Industrial module: ≥ 1 000 L/day.

Each configuration uses a passive thermal loop powered exclusively by recovered waste heat.

The water-production apparatus interfaces seamlessly with the invention's EMS-1 energy-management subsystem, which governs thermal distribution for heating, cooling, or agricultural use.

Both systems share data through an AI-driven control layer that optimizes pump operation, flow rates, and energy reuse.

In all configurations, a cellular backup and smart-contract connection maintain on-chain logging of operational data for energy, heat, and water metrics.

A dedicated blockchain-integration layer forms the digital backbone of the invention's incentive framework. It comprises the following functional modules:
1. Measurement Module: determines instantaneous and cumulative coefficient of performance (COP) for the water-production process, based on measured water output and total energy input.
2. Blockchain Interface Module: automatically issues digital environmental tokens when verified COP values exceed baseline or industry-standard thresholds.
3. Smart-Contract Validation System: receives encrypted sensor data from a secure IoT module, verifies authenticity, and executes on-chain issuance logic without human intervention.
4. Audit and Verification Interface: allows third-party auditors to review operational data and confirm accuracy before token minting.
5. Dynamic Valuation Logic: adjusts token value in real time using external data oracles linked to water-scarcity indices, regional energy prices, or carbon-offset markets.
6. Marketplace Integration Layer: enables tokens to be traded, retired, or used to finance future decentralized water-generation projects through interoperable environmental-asset platforms.

To minimize over-crediting and ensure environmental integrity, the system applies conservative issuance parameters, limiting the number of tokens to a discounted estimate of the verified efficiency gain.

Operational metrics are computed and logged automatically by the control subsystem as follows:
- Thermal Coefficient of Performance: COP□□ = Q_water / E_total
- Net Energy Savings: ΔE = Q_water - E_total
- Carbon-Emission Reduction: CO₂_saved = (Q_water - E_grid) × EF_grid
where E_grid = max (0, E_total - E_solar).

Two classes of block chain-verified digital assets are generated:
- $Energy Efficiency Tokens = max \left(0, ΔE\right) - representing measured energy savings ;$ and
- 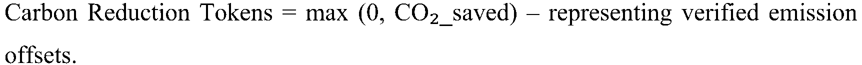 Carbon Reduction Tokens = max (0, CO2_saved) - representing verified emission offsets.

All token issuance events are cryptographically signed and recorded on a distributed ledger, ensuring immutability, transparency, and regulatory compliance.

The associated method for incentivized water generation comprises:
1. Generating water from ambient air using waste heat from immersion-cooled devices;
2. Measuring water output and total energy input to calculate COP;
3. Comparing the measured COP against a baseline;
4. Verifying measurement integrity through cryptographically secured sensor inputs; and
5. Issuing blockchain tokens if COP exceeds the baseline threshold.

The method optionally includes audit-based correction or probabilistic baselining to account for environmental variability, and supports token trading and retirement on decentralized markets.

Each token carries metadata linking it to a specific unit or deployment, ensuring full traceability in sustainability reporting.

The invention can be applied in agricultural facilities, where recovered heat simultaneously powers greenhouse heating, livestock hydration, and on-site water supply. Traditional systems relying on gas boilers or evaporative coolers can thus be replaced or supplemented by the present invention's waste-heat-driven, off-grid HVAC and water-production modules.

Although token issuance is optional in such integrations, data collection for energy and carbon accounting remains active, allowing subsequent verification if desired.

The modular water-from-waste-heat system with blockchain-based incentive architecture provides:
- Conversion of low-grade computational waste heat into fresh water;
- Fully off-grid, self-regulating operation with autonomous backup;
- Transparent performance verification via smart contracts and secure sensors;
- Conservative, auditable token issuance minimizing greenwashing risk;
- Dynamic valuation linked to environmental and market data;
- Integration with environmental marketplaces and regenerative-finance platforms; and
- Scalable deployment across residential, commercial, industrial, and agricultural sectors.

Through this combination of thermodynamic efficiency and digital transparency, the invention unites physical sustainability outcomes with blockchain-verified economic incentives, establishing a new paradigm for regenerative resource management.

Through these features, the invention maximizes the use value of computational waste heat, reduces dependency on conventional infrastructure, and enables sustainable, decentralized production of water and thermal energy across residential, commercial, industrial, and agricultural sectors.

It will be clear to those skilled in the art that various modifications of the system for thermal management and energy optimization digital infrastructures are possible, which are also within the scope of the invention as defined in the appended claims. All parts of the system for thermal management and energy optimization in digital infrastructures can be replaced with technically equivalent elements.

The reference numbers of the technical features are included in the claims solely for the purpose of increasing the comprehensibility of the claims and, therefore, these reference numbers do not have any limiting effect on the interpretation of the elements indicated by these reference numbers.

## Claims

1. A system for thermal management and energy optimization in digital infrastructures, comprising a closed-loop thermal circuit containing a heat-transfer medium and including at least one immersion vessel, at least one electronic processing assembly, at least one service interface, at least one subsystem, circulation means, an instrumentation layer, an AI-based control block, a digital-token issuance interface, and a blockchain-based control subsystem, wherein:
(a) said heat-transfer medium is configured to receive heat from the least one electronic processing assembly which is in contact with the medium, the circuit further including the least one service interface configured to transfer thermal energy to the least one subsystem;
(b) circulation means comprise one or more pumps coupled to the closed-loop thermal circuit to drive the medium between the immersion vessel and the service interface;
(c) the instrumentation layer comprises at least one of:
(i) temperature sensors disposed to measure temperatures of the medium within the immersion vessel and along the circuit;
(ii) at least one flow sensor disposed to measure volumetric flow of the medium in the circuit;
(iii) electrical metering configured to measure electrical consumption of the electronic processing assembly and auxiliaries; and
(iv) at least one service-quantity meter disposed at or associated with the service interface and configured to determine a delivered service quantity selected from useful heating, cooling, water produced, or electricity regenerated;
(d) the AI-based control block includes a processor, memory, and communication means, and is configured to:
(i) acquire measurements from the instrumentation layer and, when available, external data describing any of grid electricity, carbon intensity, energy price, or ambient conditions;
(ii) compute thermodynamic performance metrics based on total electrical input of the system, and, where applicable for grid-connected configurations;
(iii) perform measurement-and-verification analysis on interval data and validate plausibility of the measurements; and
(iv) command the circulation means and the electronic processing assembly to maintain defined operating targets; and
(e) the digital-token issuance interface is coupled to the AI-based control block and to the blockchain-based control subsystem, and is configured to record, when issuance policy conditions are met, based on the analysis from the AI-based control block, a representation of verified energy savings and/or emissions reductions derived from the interval data.

2. A system for thermal management and energy optimization in digital infrastructures, wherein the heat-transfer medium is heat transferring dielectric fluid, and the at least one immersion vessel is at least one tank, and the at least one electronic processing assembly is at least one digital infrastructure, and the at least one service interface is at least one subsystem, containing at least an external heat exchanger configured to recover waste heat, comprising:
- said least one tank containing heat transferring dielectric fluid, connected by at least one pipe connection to said least one subsystem, containing at least an external heat exchanger configured to recover waste heat, in a closed loop,
- said at least one digital infrastructure is immersed in said heat transferring dielectric fluid of each of the tanks, or is in contact with it,
- one or more circulation pumps, positioned in each of the tanks with access to the fluid inside said tanks, wherein each of said pumps is connected by a pipe connection to the at least one external heat exchanger,
- an AI-based control block configured to monitor, analyze, and optimize the operation of the system in real time, and comprising a memory, a processor and communication means,
- temperature sensors configured for measuring temperature of heat transferring dielectric fluid around the at least one digital infrastructure, and flow sensors configured for dielectric fluid flow rate measurement, wherein each tank comprises such temperature and flow sensors, which are configured to send real time data to the AI-based control block for dynamic pump/ digital infrastructure parameter adjustments,
- communication unit for data connection,
- a blockchain-based control subsystem, configured for token issuance and validation of performance thresholds for Energy Efficiency Tokens and/or Water Generation and/or Carbon Reduction Tokens,
- a digital active generation interface with a logical block for digital active generation installed in each digital infrastructure, configured for collecting and analyzing energy efficiency and/or water generation, and/or carbon offsets based on received information from the AI-based control block, and for issuing digital actives for verified energy efficiency and carbon offsets, wherein the digital active generation interface is directly or indirectly connected to at least one of the AI-based control block for two-way data exchange, and to local hardware sensors, and to the blockchain-based control subsystem, and to the at least one digital infrastructure,
wherein said AI-based control block has a logical block configured for analysing received data for at least one of:
• temperature measurements from sensors located within or around the at least one immersion tank containing dielectric cooling fluid;
• flow-rate measurements of the dielectric fluid circulating through the at least one tank and associated external heat exchangers;
• device computational load from the at least one digital infrastructure, measured from at least one temperature sensor located outside of the tank and on the fluid line between the inlet and outlet of the tank in which the at least one digital infrastructure is arranged;
• thermal transfer parameters and energy balance data from connected subsystems,;
• performance parameters for calculating the coefficient of performance of the system, including total thermal input, useful heat or water output, and derived energy efficiency, derived from sensors;
• energy mix of used grid composition determining the percentage of electricity generated from different types renewable and fossil fuels sources in a specific region at a given time, which is delivered to the system from external sensors and/or computer device through a logical subblock for real-time oracles measurements;
• carbon intensity determining the amount of CO₂ emissions produced per kilowatt-hour of electricity, which varies by region and time of day, which is delivered to the system from external sensors and/or computer device through a logical subblock for real-time oracles measurements;
• energy cost signals, which are delivered to the system from external sensors and/or computer device through a logical subblock for real-time oracles measurements,
• environmental conditions, which are directly or indirectly delivered to the system from external sensors through a logical subblock for real-time oracles measurements;
• verification and reporting data received from a blockchain-based control subsystem, including token issuance events and validation of performance thresholds for Energy Efficiency Tokens and/or Water Generation and/or Carbon Reduction Tokens,
wherein said AI-based control block is also configured to calculate optimal cooling level and to control pump speed,
wherein said AI-based control block is also configured to calculate coefficient of performance of the system based on the received measured data in the logical block of the AI-based control block,
wherein the at least one digital infrastructure, and the sensors for temperature and flow measurements, and the one or more circulation pumps, and the AI-based control block are configured for connection to a power supply.

3. A system for thermal management and energy optimization in digital infrastructures according to any of the preceding claims, wherein the at least one digital infrastructure is a Data Center or AI Center, or a GPU or ASIC hardware.

4. The system according to any of the preceding claims, further comprising thermoelectric generators, which are connected to the digital infrastructure and/or to one or more pumps and/or to one or more sensors, said thermoelectric generators are immersed in the heat transferring dielectric fluid inside the tanks, wherein said thermoelectric generators are connected to a power management system and to the AI-based control block.

5. The system according to any of the preceding claims, wherein the blockchain interface with a logical block for blockchain-based tokenomics integrated circuit is configured for issuing tokens to users for each verified kWh saved and/or for each verified kilogram of carbon offset, regionally adjusted by the logical subblock for real-time oracles measurements, the blockchain interface with a logical block for blockchain-based tokenomics integrated circuit is configured for verifying real-time energy efficiency in digital infrastructures with a Proof of Efficiency (PoE) algorithm for issuance of tokens based on measured power draw vs. recovered heat.

6. The system according to any of the preceding claims, wherein the blockchain interface with a logical block for blockchain-based tokenomics integrated circuit is configured for using smart contracts for automatic reward distribution based on energy efficiency and sustainability metrics.

7. The system according to any of the preceding claims wherein the blockchain interface with a logical block for blockchain-based tokenomics integrated circuit has logical subblock configured for communication with a Stratum-integrated protocol correlating device performance data to on-chain PoE issuance.

8. The system according to any of the preceding claims, wherein a line of dielectric fluid is in direct contact with heat recovery capability with a backplate of solar panel in a sealed cavity.

9. The system according to any of the preceding claims, further comprising an integrated industrial energy management subsystem configured for capturing, upgrading, storing, and redistributing thermal and electrical energy recovered from the at least one external heat exchanger, the subsystem comprising:
(a) at least one chemical heat transformer configured to upgrade low-grade waste heat of approximately 75 °C from the dielectric-fluid cooling loops of the digital infrastructure to high-grade thermal energy through thermochemical reactions;
(b) a thermal buffer storage unit containing stratified thermal media selected from sand, molten salt, or water-based fluids, the buffer being configured to
(i) receive continuous thermal input from the chemical heat transformer, and
(ii) receive intermittent thermal input from at least one electrically powered heating element supplied by renewable energy sources;
(iii) store heat within the stratified layers of thermal media to maintain temperature gradients and minimize losses;
(iv) discharge or deliver stored heat to downstream subsystems and process heating circuits, in response to thermal demand,
(c) a thermal-oil loop arranged to extract and distribute upgraded heat at temperatures between 180 °C and 200 °C to one or more downstream industrial subsystems selected from
(i) an Organic Rankine Cycle generator for electricity regeneration,
(ii) absorption chillers,
(iii) district-heating networks, and
(iv) facility or process-heating units,
wherein the blockchain-based control subsystem is configured to
(i) monitor thermal and electrical-energy flows across the full system lifecycle,
(ii) tokenize carbon-credit and electricity-generation data based on verified energy reuse and renewable-integration metrics,
(iii) publish operational and regulatory data on-chain using a decentralized proof-of-stake network to ensure transparency and fraud resistance, and
(iv) enable trading of tokenized electricity or carbon-credit assets via smart contracts.

10. The system according to any of the preceding claims, wherein the heat exchanger is part of a thermally powered ejector-based air conditioning system configured for leveraging waste heat or solar thermal energy for cooling without traditional mechanical compressors.

11. The system according to any of the preceding claims, wherein the heat exchanger is part of a blockchain-integrated modular water-production apparatus configured to convert low-grade waste heat from an immersion-cooled computing device into fresh water, wherein the apparatus comprises:
- a sorption module configured to capture and regenerate atmospheric moisture using the recovered waste heat;
- a condensation chamber configured to condense desorbed vapor into liquid water;
- a sealed water-collection unit configured to store the condensed water;
- integrated control sensors configured to monitor temperature, humidity, flow rate, and water level and to manage the sorption-regeneration cycles of the system;
- a measurement and control subsystem configured to determine water-production performance metrics including the coefficient of performance (COP), thermal energy input, and mass of collected water,
wherein the blockchain-based control subsystem is configured to:
d) receive verified operational data from said measurement and control subsystem,
e) calculate environmental performance indicators including energy savings and carbon-emission reductions associated with the recovered waste heat, and
f) generate cryptographically verifiable digital environmental tokens, comprising:
III. Energy Efficiency Tokens, issued based on verified thermal-to-water conversion efficiency or energy savings, and
IV. Carbon Reduction Tokens, issued based on calculated and verified emission offsets;
wherein said blockchain-based subsystem employs secure Internet-of-Things (IoT) communication and smart-contract logic to validate measurement data on-chain prior to token issuance,
and wherein all performance records, verification data, and token issuance events are stored on a distributed ledger for transparency, traceability, and auditability.

12. A method for optimizing energy efficiency in digital infrastructures, comprising the steps of:
a) immersing hardware in a cooling tank to regulate thermal load;
b) applying AI-driven dynamic optimization to adjust coolant flow, device power allocation, and workload balancing based on real-time data received from sensors;
c) integrating digital active generation to verify energy savings and allocate efficiency digital active and carbon credits tokens accordingly;
d) integrating blockchain-based tokenomics to verify energy savings and allocate efficiency tokens and carbon credits tokens accordingly;
e) measuring CoP through a flexible system that does not require direct fluid inlet/outlet tracking unless per-radiator data is needed.

13. A method for optimizing energy efficiency in digital infrastructures according to claim 12, wherein the digital infrastructure is a Data Center or AI Center, or a GPU or ASIC hardware.

14. A method for optimizing energy efficiency in digital infrastructures according to claims 12-13, wherein the verification of energy savings and allocation of efficiency tokens and carbon credits tokens is based on computational proof of efficiency

15. A method for optimizing energy efficiency in digital infrastructures according to claims 13 and 14, wherein the optimized digital infrastructure further comprises a waste-heat utilization subsystem configured to drive atmospheric water generation, wherein the method additionally comprises the steps of:
• recovering low-grade heat from the immersion-cooling dielectric fluid and transferring it through a heat exchanger to a water-production module configured to extract water from ambient air;
• measuring the produced water volume and the corresponding thermal energy input to determine a water-generation coefficient of performance;
• comparing the measured coefficient of performance with a predefined baseline efficiency value; and
• upon verification that the measured efficiency exceeds said baseline, issuing blockchain-based digital environmental tokens, including energy-efficiency tokens and carbon-reduction tokens, through digital-active-generation, the issuance being validated automatically via smart-contract logic using data received from the system sensors.
